# EUROPEAN PATENT APPLICATION

(11) **EP 3 836 037 A1**
(43) Date of publication of application: **16.06.2021**
(21) Application number: 19833726.3
(22) Date of filing: 03.07.2019
(51) Int. Cl.: G06N 5/04

(54) **METHOD AND SYSTEM FOR EXECUTING MACHINE LEARNING PROCESS**

(30) Priority: 10.07.2018 CN 201810751791
(71) Applicant: The Fourth Paradigm (Beijing) Tech Co Ltd, Beijing 100085 (CN)
(72) Inventor: WANG, Min, Beijing 100085 (CN); LI, Han, Beijing 100085 (CN); QIAO, Shengchuan, Beijing 100085 (CN); TAO, Xuejun, Beijing 100085 (CN); SUN, Yue, Beijing 100085 (CN); TANG, Jizheng, Beijing 100085 (CN); XU, Yun, Beijing 100085 (CN)
(74) Representative: Müller Hoffmann & Partner
(86) International application number: PCT/CN2019/094474
(87) International publication number: WO 2020/011068

(57) **Abstract**

A method and a system (100) for executing a machine learning process, the system (100) comprising: a data collecting unit (110), configured to continuously collect prediction data; a real result collecting unit (120), configured to continuously collect real results of the prediction data; an automatic model training unit (130), configured to generate an updated training sample according to a configured model update scheme on the basis of the collected prediction data and the corresponding real results thereof, and using the updated training sample to continuously obtain updated machine learning models; and a service providing unit (140), configured to select from the machine learning models, according to a configured model application scheme, an online machine learning model for providing an online prediction service, and in response to a prediction service request including the prediction data, use the online machine learning model to provide a prediction result for the prediction data included in the prediction service request.

## Description

This application is based on and claims priority of Chinese Patent Application No. 201810751791.X, filed on July 10, 2018, in China National Intellectual Property Administration, the disclosure of which is herein incorporated by reference in its entirety.

### TECHNICAL FIELD

The disclosure generally relates to an artificial intelligence (AI) field, and in particular, to a method and system for performing machine learning process.

### BACKGROUND ART

With the emergence of massive amounts of data, Artificial Intelligence technology has developed rapidly, and machine learning is an inevitable product with the development of artificial intelligence to a certain stage, which is committed to mining valuable potential information from large amounts of data by computational means. In a computer system, "model" may be generated from historical data by machine learning algorithms, that is, by providing the historical data to the machine learning algorithms, a machine learning model may be obtained by modeling based on these historical data.

However, in a machine learning process, it relates to the processing of data, features, algorithms, parameter adjusting and optimizing and many other aspects, which requires a lot of machine learning knowledge and experience; in addition, how to provide a prediction service by using a trained model in practice, which also requires a lot of labor costs. All the above aspects make the threshold for applying machine learning technology extremely high. Even if there are some platform products for machine learning modeling, the existing machine learning platforms only focus on completing the investigation of the machine learning models, that is, they can only realize how to train one machine learning model based on accumulated historical data, but cannot effectively implement the subsequent generation and application of the machine learning model (for example, it is difficult to provide an online service by using the machine learning model). In other words, the existing technology has a problem of serious separation between modeling schemes or results and model application processes.

### SUMMARY

Exemplary embodiments of the disclosure are to provide a method and a system for performing machine learning process so as to at least solve the above-mentioned problems in the prior art.

According to the first aspect of the disclosure, a system for performing machine learning process is provided, the system comprising:
a data collecting unit configured to continuously collect prediction data; a real result collecting unit configured to continuously collect real results of the prediction data; a model auto-training unit configured to generate updated training samples based on the collected prediction data and corresponding real results thereof and continuously obtain updated machine learning models by using the updated training samples, according to a configured model updating scheme; and a service providing unit configured to select an online machine learning model for providing an online prediction service from among the machine learning models according to a configured model application scheme, and in response to a prediction service request including prediction data, provide a predicted result for the prediction data included in the prediction service request by using the online machine learning model.

According to the second aspect of the disclosure, a computer-readable storage medium for performing machine learning process is provided, wherein a computer program for performing the following operations is recorded on the computer readable medium: continuously collecting prediction data; continuously collecting real results of the prediction data; generating updated training samples based on the collected prediction data and corresponding real results thereof and continuously obtaining updated machine learning models by using the updated training samples, according to a configured model updating scheme; and selecting an online machine learning model for providing an online prediction service from among the machine learning models according to a configured model application scheme, and in response to a prediction service request including prediction data, providing a predicted result for the prediction data included in the prediction service request by using the online machine learning model.

According to the third aspect of the disclosure, a computing device for performing machine learning process is provided, the computing device including a storage part and a processor, wherein the storage part stores a computer executable instruction set, the computer executable instruction set, when executed by the processor, causes the processor to: continuously collect prediction data; continuously collect real results of the prediction data; generate updated training samples based on the collected prediction data and corresponding real results thereof and continuously obtain updated machine learning models by using the updated training samples, according to a configured model updating scheme; and select an online machine learning model for providing an online prediction service from the machine learning models according to a configured model application scheme, and in response to a prediction service request including prediction data, provide a predicted result for the prediction data included in the prediction service request by using the online machine learning model.

According to the fourth aspect of the disclosure, a method for performing machine learning process is provided, the method comprising: providing a first operation entrance and a second operation entrance independent from each other, wherein the first operation entrance is used to collect behavioral data that is a basis of model prediction, and the second operation entrance is used to collect feedback data that are real results of behavioral data; acquiring and saving the behavioral data collected through the first operation entrance and the feedback data collected through the second operation entrance; training a machine learning model by using at least one model algorithm, based on the saved behavioral data and feedback data.

According to the fifth aspect of the disclosure, a system for performing machine learning process is provided, the system comprising: an interaction unit configured to provide a first operation entrance and a second operation entrance independent from each other, wherein the first operation entrance is used to collect behavioral data that is a basis of model prediction, and the second operation entrance is used to collect behavioral data that are real results of the behavioral data; a data collecting unit configured to acquire and save the behavioral data collected through the first operation entrance; a real result collecting unit configured to acquire and save the feedback data collected through the second operation entrance; and a model auto-training unit configured to train a machine learning model by using at least one model algorithm, based on the saved behavioral data and feedback data.

According to the sixth aspect of the disclosure, a computing device for performing machine learning process is provided, the computing device including a system according to any one of the first aspect of the disclosure and the fifth aspect of the disclosure; or,
the computing device includes a storage part and a processor, wherein the storage part stores a computer-executable instruction set, the computer-executable instruction set, when executed by the processor, causes the processor to execute a method according to any one of the fourth aspect of the disclosure.

According to the seventh aspect of the disclosure, a computer-readable medium for performing machine learning process is provided, wherein a computer program for performing a method according to any one of the fourth aspect of the disclosure is recorded on the computer-readable medium.

The system for performing machine learning process according to an exemplary embodiment of the disclosure enables processes such as data collecting, model generation, and model application to realize full-process cyclic operations, thereby greatly reducing the threshold and cost of the machine learning technology.

Additional aspects and/or advantages of the general concept of the disclosure will be partially set forth in the description which follows, and in part will be clear through the description, or may be learned by practice of the general concept of the disclosure.

### BRIEF DESCRIPTION OF THE DRAWINGS

The drawings incorporated in the specification and constituting a part of the specification illustrate the embodiments of the disclosure, and together with the descriptions thereof, are used to explain the principle of the disclosure.
FIG. 1 shows a block diagram of a system for performing machine learning process according to an exemplary embodiment of the disclosure;
FIG. 2 shows a flowchart of a method for performing machine learning process according to an exemplary embodiment of the disclosure;
FIGS. 3 to 8 show examples for performing machine learning process according to an exemplary embodiment of the disclosure;
FIG. 9 shows a flowchart of a method for performing machine learning process according to another embodiment of the disclosure;
FIGS. 10 to 17 show examples for performing machine learning process according to another embodiment of the disclosure;
FIG. 18 shows a block diagram of a system for performing machine learning process according to another embodiment of the disclosure;
FIG. 19 shows a block diagram of a system for performing machine learning process according to another embodiment of the disclosure;
FIG. 20 shows a block diagram of a computing device for performing machine learning process according to an embodiment of the disclosure;
FIG. 21 shows a block diagram of a computing device for performing machine learning process according to another embodiment of the disclosure.

### DETAILED DESCRIPTION

Reference will now be made in detail to the embodiments of the disclosure, examples of which are illustrated in the accompanying drawings, wherein like reference numerals always refer to the like parts. The embodiments will be described below by referring to the accompanying drawings in order to explain the disclosure. It should be noted here that "and/or" appearing in the disclosure refers to including three parallel situations. For example, "including A and/or B" refers to including at least one of A and B, that is, including the following three parallel situations: (1) including A; (2) including B; (3) including A and B. For another example, "performing step one and/or step two" refers to performing at least one of step one and step two, that is, refers to the following three parallel situations: (1) performing step one; (2) performing step two; (3) performing step one and step two.

Here, in order to facilitate a better understanding of the disclosure, firstly, some knowledge involved in the disclosure will be explained. In the machine learning field, "a machine learning model" is usually trained to determine the ideal parameters that constitute the machine learning model by providing historical data to a machine learning algorithm. The trained machine learning model may be applied to provide a judgment for a corresponding prediction target when facing new data to be predicted, that is, a predicted result. Here, it can be seen that the historical data (i.e., training data) used for training the machine learning model, as raw material for machine learning often leads to machine learning models with different effects. Whether training the machine learning model or making prediction by using a trained machine learning model, raw data records need to be converted into machine learning samples that include various features. It should be noted that, in the disclosure, the exemplary embodiments of the disclosure do not specifically limit specific machine learning algorithms unless explicitly stated otherwise.

### <Embodiment one>

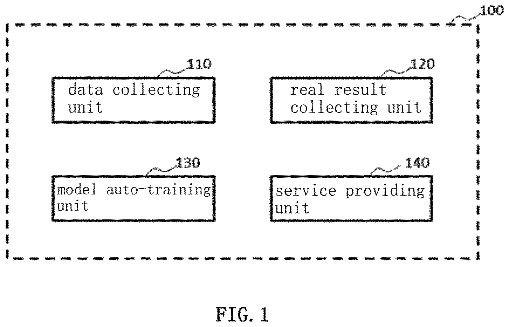

FIG. 1 shows a block diagram of a system 100 for performing machine learning process according to an exemplary embodiment of the disclosure. The system 100 includes a data collecting unit 110, a real result collecting unit 120, a model auto-training unit 130, and a service providing unit 140.

Specifically, the data collecting unit 110 may continuously collect prediction data. Here, the prediction data may be data that a user (for example, an information service provider for recommending information) expects to obtain a relevant predicted result. Here, the data collecting unit 110 may continuously receive the prediction data from the user or via other paths. For example, when the user wants to know a predicted result of whether information recommended to his customers (for example, terminal consumers) will be accepted (that is, whether it will be clicked or read by the consumers), the data collecting unit 110 may collect the prediction data, that is, attribute information data about information desired to be recommended.

As an example, the collection of prediction data may be automatically implemented within the system, for example, the user may transmit a prediction service request including the prediction data to the service providing unit 140, wherein the prediction data may include information that the user desires to recommend to consumers and/or basic attribute information of the consumers (for example, information topics, information display locations, consumer identifiers, gender, age, height, weight, hobbies, etc.). Here, the system 100 may provide a prediction data automatic backflow function, as an example, the function may be turned on by default or according to the user's selection, wherein the function enables the service providing unit 140 to automatically save the prediction data included in the prediction service request, and the data collecting unit 110 may continuously collect the prediction data from the service providing unit 140, for example, the service providing unit 140 may insert the prediction data into a specific cluster (for example, a Kafka cluster), and the data collecting unit 110 automatically collects the prediction data from the cluster. Alternatively, the prediction data may also be behavioral data used by a user (for example, a bank) to determine whether a customer (for example, a depositor) has a fraudulent behavior, but it is not limited thereto. For ease of description, in the following description, it is assumed that the user is an information service provider that recommends information to the consumers, and the prediction data is data including information that the user desires to recommend to the consumers and/or the basic attribute information of related consumers.

The real result collecting unit 120 may continuously collect real results of the prediction data. Here, the real results of the prediction data may be real labels of the prediction data, and the real result collecting unit 120 may collect the real results of the prediction data regularly, in batches or in real time from users or via other paths. For example, in an example in which the user wants to predict whether the information recommended to the consumers will be accepted, the real results of the prediction data may indicate real feedback of the consumers on the predicted and actually recommended information. Specifically, a predicted result for prediction data is a result predicted by the service providing unit 140 using the machine learning model (for example, a predicted result that it will be clicked to read is expressed as 1, and a predicted result that it will not be clicked to read is expressed as 0), on this basis, a probability, that a consumer may click a certain piece of information, with respect to the information may be further provided, for example, 0.9, 0.85 or 0.76 and so on. The real result collecting unit 120 continuously collects real results reflecting the real feedback of the consumers corresponding to the prediction data from the user, for example, after a user recommends pieces of information to a consumer according to the predicted result for the prediction data received from the service providing unit 140 (e.g., probability that the consumer may click on each piece of information), and the consumer clicks and browses at least one of the pieces of information and ignores remaining information, a real result for the prediction data corresponding to the at least one piece of information may be assigned 1, and real results for the prediction data corresponding to the remaining information may be assigned 0.

The model auto-training unit 130 may, according to a configured model updating scheme, generate updated training samples based on the collected prediction data and corresponding real results thereof and continuously obtain the updated machine learning models by using the updated training samples.

Here, the model updating scheme may be a scheme for training a model completely, and may also be a scheme for incremental learning on the basis of an existing model. Correspondingly, as the prediction data and the real results thereof are continuously collected, new models may be continuously generated according to the model updating scheme.

As an example, before the model auto-training unit 130 continuously obtains the updated machine learning models, there is already an initial machine learning model in the system 100, and the initial machine learning model may be a machine learning model previously trained by the system 100 (for example, the model auto-training unit 130) by using a model training scheme, and may also be a machine learning model generated by other systems and imported into the system 100. With the initial machine learning model, the system 100 (for example, the service providing unit 140) may utilize it to provide an online prediction service in an initial stage. Here, as an example, the model auto-training unit 130 may generate a configured model updating scheme on the basis of a model training scheme based on which the initial machine learning model is trained, that is, the model updating scheme may be consistent with the model training scheme in terms of the processes for data, features, algorithms, and/or parameters and the like. On this basis, the model auto-training unit 130 may continuously obtain the updated machine learning models by using the updated training samples according to the configured model updating scheme.

Here, the updated training samples are data samples with real conclusions, in other words, the updated training samples may be samples generated, according to a process related to feature generation defined in the model updating scheme, by combining features, which are obtained by performing feature extraction on the collected prediction data, and real results (i.e. labels) corresponding to the collected prediction data. Specifically, the prediction data collected by the data collecting unit 110 may be stored in a local storage medium or a cloud computing platform with data storage function (including but not limited to a public cloud and a private cloud) in the form of a data table. Generally, a row of the data table may correspond to a piece of data record, and a column of the data table may correspond to an attribute field. Each data record in the data table may include one or more attribute information (i.e., attribute fields). The attribute field may be used to form a feature, and the feature is a component of the training samples. Here, a feature may be the attribute field itself or a part of the attribute field, a combination of attribute fields, or a result obtained from a processing (or operation) of the attribute fields. Different features may be further combined. For example, at least one feature may be obtained from one row of the prediction data in the data table after the feature extraction, and the obtained at least one feature and a corresponding real result of the row of the prediction data constitute an updated training sample. Preferably, the updated training samples may be samples generated by combining various features, which are obtained by performing feature extraction and feature combination on the collected prediction data, and the real results of the collected prediction data.

After the updated training samples are generated, the model auto-training unit 130 may further continuously obtain the update machine learning models by using the updated training samples according to settings regarding model training (for example, the model algorithms, the parameter adjusting and optimizing, etc.) defined in the configured model updating scheme. As described above, the configured model updating scheme may be generated by the model auto-training unit 130 on the basis of the model training scheme based on which the initial machine learning model is trained, or it may be any scheme for continuously training and obtaining the machine learning models, the model updating scheme herein aims to emphasize that the scheme may be used to more automatically and continuously generate models, but does not limit the manners of model generation to full retraining or incremental learning training.

In addition, in order to automatically perform model updating better, the model updating scheme may also include at least one of: a data selecting rule for selecting prediction data used to generate the updated training samples from the prediction data, and a model updating cycle, a model storage location, and an updating resource auto-configuration manner for updating the machine learning model by a model auto-training unit.

Specifically, for the data selecting rule, the prediction data collected by the data collecting unit 110 may contain a lot of prediction data, and the data selecting rule may specify which of the prediction data collected by the data collecting unit 110 is specifically selected to generate the updated training samples, for example, a rule of selecting all data, selecting data according to a time range (for example, data from the last 3 days), selecting data according to a range of storage location (for example, 20^{th} slice data ∼ 200^{th} slice data), or the like.

For the model updating cycle, in order to enable the machine learning model to provide more accurate predicted results for the received prediction data, the model auto-training unit 130 may update the machine learning model according to a certain model updating cycle (i.e., generate a new machine learning model). The model updating cycle may be pre-configured by the user, or may be modified in real time according to a specific condition based on a certain rule.

For the model storage location, due to the continuous updating of the machine learning model, multiple machine learning models will be obtained, in order to enable the service providing unit 140 to select an online machine learning model used to provide an online prediction service from the multiple machine learning models, the model auto-training unit 130 needs to determine locations for storing the updated machine learning models which are continuously obtained. For example, the machine learning models may be stored in a model center inside the system 100, which may also enable the user to view model-related interpretations and reports..

For the updating resource auto-configuration manner, the model auto-training unit 130 needs to know how to utilize system resources (for example, CPU, bus, bandwidth, memory and other resources) during the process of obtaining the updated machine learning models. Here, the auto-training unit 130 may configure the resources according to a data amount together with a rule, but the disclosure is not limited thereto.

The model training scheme may be a scheme determined by the model auto-training unit 130 during the process of training the initial machine learning model by using automatic machine learning technology, or any suitable model training scheme determined in advance by other means. The process of how the model training unit 130 determines the model training scheme during the process of training the initial machine learning model will be described in detail below.

According to an exemplary embodiment of the disclosure, the initial machine learning model may indicate a model trained according to automatic machine learning technology in the model investigation stage, as an example, it may be used to provide prediction service for prediction data in the initial stage, and the data records based on which the initial machine learning model is trained are referred to as the historical data, for this end, the data collecting unit 110 may collect the historical data in addition to the prediction data, accordingly, the real result collecting unit 120 may collect the real results of the historical data in addition to the real results of the prediction data, wherein the historical data is data accumulated historically that already has real results. Here, as an example, the historical data records itself may include label fields (i.e., the real results), but in order to be consistent with the system of the exemplary embodiment of the disclosure, the historical data record table may be segmented firstly to obtain the historical data (excluding the label fields) and label fields, and the historical data and the real results are imported into the data collecting unit 110 and the real result collecting unit 120, respectively.

Since the modeling process is a high threshold link in machine learning, in the modeling process, data processing, feature engineering, algorithm selection, parameter adjustment and so on all require a lot of machine learning knowledge and experience, it is very difficult to connect the whole modeling process automatically in series to realize the automatic machine learning process, and it is rarely possible to achieve it, the disclosure aims to realize the automatic machine learning process through the model auto-training unit 130. This will be described in detail below.

The model auto-training unit 130 may generate the initial training samples based on the collected historical data and corresponding real results thereof and train the initial machine learning model by using the initial training samples, according to the automatic machine learning technology. The initial training samples may be samples generated by combining features, which are obtained by performing feature extraction on the collected historical data according to the automatic machine learning technology, and the real results corresponding to the collected historical data, here, as an example, the each field of the historical data may be declared as a discrete or a continuous feature according to a data type of the field and/or the algorithm used to train the model. Preferably, the initial training samples may be samples generated by combining various features, which are obtained by performing feature extraction and feature combination on the collected historical data according to the automatic machine learning technology, and the real results of the historical data.

The automatic machine learning technology may relate to at least one of: an automatic data splitting for splitting the historical data into training data and verification data, automatic feature generation for performing feature extraction on the training data and the verification data according to data field type and/or data distribution, automatic feature combination for determining combined features according to feature importance, automatic parameter adjusting for adjusting and optimizing parameters in a preset parameter adjusting manner, automatic model selecting for determining one or more trained models to provide the predicted result according to a prediction effect, and automatic configuration of resources according to a preset rule

Specifically, the historical data may be automatically split into the training data and the verification data according to a preset splitting rule, and the two data sets will be performed the same feature processing process. Correspondingly, an automatic feature generation process may be performed according to the type of the data field (for example, numeric type, categorical type, etc.) and/or the distribution characteristics of the data, for example, certain fields in the data set are automatically declared as discrete or continuous features , or specific numerical operations (e.g., logarithmic operations, etc.) are performed. Preferably, which features will be combined may be determined according to an algorithm on how to determine the feature importance, for example, a variety of candidate feature combination manners may be constructed according to a rule, and for each candidate feature combination manner, relative importance of the combined features generated in the feature combination manner are determined(for example, the importance of a feature may be measured based on the prediction effect of the feature in the model), and a feature combination manner with higher importance is determined as the final feature combination method. The model auto-training unit 130 may also adopt an automatic parameter adjusting manner (for example, automatically selecting an optimal solution, etc.) to perform automatic adjusting and optimizing during the model training process. Here, the model auto-training unit 130 may select a specified model algorithm for training according to the characteristics of the historical data. For this end, as an optional manner, the model auto-training unit 130 may specify one or more model algorithms to train multiple models at the same time, and may determine which models ultimately provide the prediction service, based on the effects of these models, or weight the predicted results provided by respective models as the final result. In addition, during the above automatic machine learning process, it is also required to automatically configure the system resources (for example, CPU, bandwidth, memory, etc.) according to a preset rule, for example, the system resources may be configured according to a data amount in conjunction with a rule, but the disclosure is not limited thereto. After the above automatic machine learning process, a preset algorithm corresponding to the selected machine learning model with a best effect and the corresponding parameters determined by the automatic adjusting and optimizing are determined as the model training scheme.

As mentioned above, according to the automatic machine learning technology, the initial machine learning model obtained based on historical data samples may be directly used to provide the online service, and the corresponding scheme may be used as a model training scheme. Preferably, the aforementioned initial machine learning model may not be directly used to provide the online service, but a model retrained according to the model training scheme is used as the model for initially providing the online service. During the retraining process, the training data further includes the previous verification data, and due to the increased amount of the training data, the model generated by the above method may get a better prediction effect.

The process of obtaining a model training program by using the automatic machine learning technology is described above, on the basis of the model training scheme, the model auto-training unit 130 may further form a model updating scheme in conjunction with data selection, update frequency, model storage location, and resource configuration and the like.

Correspondingly, the model auto-training unit 130 may continuously obtain the updated machine learning models by using the updated training samples described above according to the configured model updating scheme.

As an example, during the process of obtaining the updated machine learning models, the model auto-training unit 130 may be designed to update the machine learning models by using the updated training samples described above only in an incremental learning manner. As another example, the model auto-training unit 130 may be designed to retrain the machine learning model by using the updated training samples described above according to the model training scheme only in a full learning manner, as an updated machine learning model. Alternatively, the model auto-training unit 130 may be designed to determine whether to use incremental learning or full learning to obtain the updated machine learning model, according to the effect of the machine learning model which provides the online service currently, for example, if the effect of the model which provides the online service currently becomes very poor (for example, AUC is less than a predetermined threshold), the model auto-training unit 130 may retrain the machine learning model in a full learning manner. If the effect of the model which provides the online service currently is acceptable (for example, the AUC is greater than or equal to the predetermined threshold), the model auto-training unit 130 may update the machine learning model in an incremental learning manner. Alternatively, the model auto-training unit 130 may be designed to determine whether to use the incremental learning manner or the full learning manner to obtain an updated machine learning model according to user settings.

In addition, since the data collecting unit 110 may continuously collect the prediction data and the real result collecting unit 120 may continuously collect the real results of the prediction data, the model auto-training unit 130 may continuously obtain the continuously updated machine learning models according to the above process, according to the model updating cycle included in the model updating scheme, and store the initial machine learning model and the updated machine learning models obtained continuously at the model storage locations specified in the model updating scheme.

In addition to the difficulty in obtaining machine learning models through the automatic machine learning process, there are also many difficulties in the application of the machine learning model, this is because the problems such as online data splicing, online feature engineering (that is, automatic feature extraction, and may further include automatic feature combination), model selecting, resource configuration, service monitoring and the like need to be solved during the process of providing a prediction service by the machine learning model, however, the current application process of the machine learning model generally have low degree of productization. However, the disclosure may effectively solve these problems through various units in the system 100.

The service providing unit 140 may select an online machine learning model for providing an online prediction service from among the machine learning models according to the configured model application scheme, and in response to the prediction service request including prediction data, provide predicted results for the prediction data included in the prediction service request by using the online machine learning model.

Specifically, as described above, the model auto-training unit 130 may continuously store the trained machine learning models at the model storage locations specified in the model updating scheme, wherein the trained machine learning models may include the initial machine learning model and updated machine learning models obtained continuously. In this case, the service providing unit 140 may select the online machine learning model for providing the online prediction service from among the stored machine learning models according to the configured model application scheme, and provide an application programming interface (API) for the prediction service to the outside. In this case, the user may request a prediction service for the corresponding prediction data via the API (that is, request the system 100 to provide a predicted result about a prediction target, for the prediction data).

As an example, the model application scheme may include the model selecting rule for selecting the online machine learning model from among the machine learning models and/or the application resource auto-configuration manner. According to the preset model selecting rule, the online model may be automatically selected, for example, the machine learning model with the highest AUC or a newly generated machine learning model may be selected as the online machine learning model, but the disclosure is not limited thereto, for example, in addition to the above automatic model selecting rules, the online model may also be selected in a manual manner. Or, the automatic and manual manners are combined with each other, that is, not only a rule for selecting the online machine learning model are set, but also the interactive manner of human confirmation or evaluation is provided at the same time. The application resource auto-configuration manner may refer to how to configure the system resources when applying the selected online machine learning model, for example, the system resources may be configured according to the data amount in conjunction with a rule, and resources may be dynamically set according to the requested traffic, but the disclosure is not limited thereto.

In addition, in order to enable the selected machine learning model to automatically provide the predicted results on the prediction data from the user, it is required that the service providing unit 140 may automatically perform feature extraction on the prediction data included in the prediction service request, to obtain the predict samples suitable for the online machine learning model. To this end, the model auto-training unit 130 adds corresponding feature extraction process information of the trained machine learning models in metadata of model files corresponding to the machine learning models, in other words, the metadata of the model files corresponding to the machine learning models obtained by the model auto-training unit 130 may include the corresponding feature extraction process information. As an example, the feature extraction process information may include a process for the data fields, a process of generating unit features from the data fields, and/or a process of performing further operations or combinations on unit features, it should be noted that the exemplary embodiments of the disclosure do not limit processing details involved by the feature extraction process, as long as they facilitates to convert the received prediction data into the prediction samples, which may be input to the machine learning models. Therefore, after the online machine learning model selected by the service providing unit 140 is used to provide the predicted results, the service providing unit 140 may utilize the feature extraction process information in the file corresponding to the online machine learning model to automatically perform feature extraction on the prediction data in the prediction service request to obtain a prediction sample, so that the online feature engineering may be realized, thereafter, the service providing unit 140 may provide a predicted result for the prediction sample by using the online machine learning model. In addition, when the service providing unit 140 provides the online prediction service by using the online machine learning model, the user may monitor state and logs of the model application service.

For example, in the case where the user is a service provider that recommends information to consumers, when the user transmits the prediction service request including the prediction data (that is, multiple pieces of information and the basic attribute information of the consumers (for example, information topics, information display locations, consumer identifiers, gender, age, hobbies, etc.)) to the service providing unit 140, the service providing unit 140 may automatically save the prediction data in the prediction service request for the data collecting unit 110 to collect the prediction data, and the service providing unit 140 utilizes the feature extraction information in the file corresponding to the online machine learning model to automatically perform feature extraction on these prediction data to generate a prediction sample, thereafter, the service providing unit 140 inputs the prediction sample into the online machine learning model and finally obtains a predicted result, for example, the predicted result may be a probability for a certain piece of information that a consumer may click on the information, for example, 0.9, 0.85, 0.76, etc. Thereafter, the service providing unit 140 provides the predicted result to the user, and the user may transmit several pieces of information most likely to be clicked by the consumers to the consumer according to the received predicted result (for example, the probability that the consumer may click on each piece of information). In this case, if the consumer clicks on a piece of information provided by the user who provides the information, the user may assign the real result of the prediction data corresponding to the piece of information to 1, if the consumer does not click on a piece of information provided by the user, the user may assign the real result of the prediction data corresponding to the piece of information as 0. On this basis, the real result collecting unit 120 may continuously collect the real results of the prediction data from the user. Through the above process, automatic backflow of the prediction data and the real results thereof may be realized, and the model auto-training unit 130 may further generate an updated machine learning model by using the backflow prediction data and the real results thereof, thereby implementing an automatic machine learning process.

In addition, when providing the online prediction service by using the online machine learning model, the service providing unit 140 also automatically saves the predicted results for the prediction data, and automatically calculates various indexes (including positive sample rate, prediction AUC and other business indexes, etc.) based on the real results collected by the real result collecting unit 120 corresponding to the prediction data to further evaluate the launch effect of the model.

It can be seen from the above description that the system 100 effectively eliminates the problem of severe separation between the machine learning process and the application process in the prior art, and the resulting problems that data backflow, model effect evaluation, and business index statistics cannot be connected, thus enterprises do not need to customize and develop separately for different models, so that the models may be reused and accumulated within the enterprise.

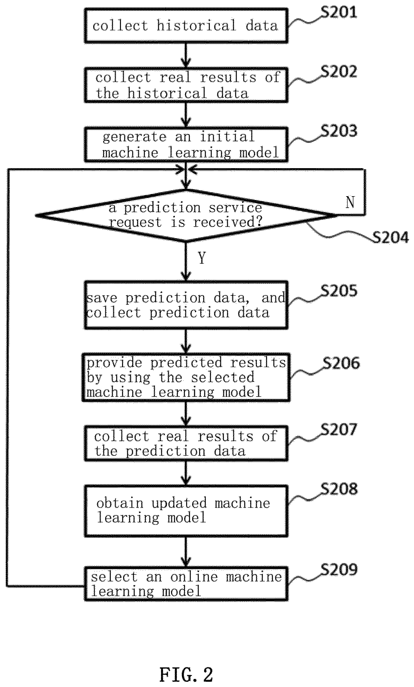

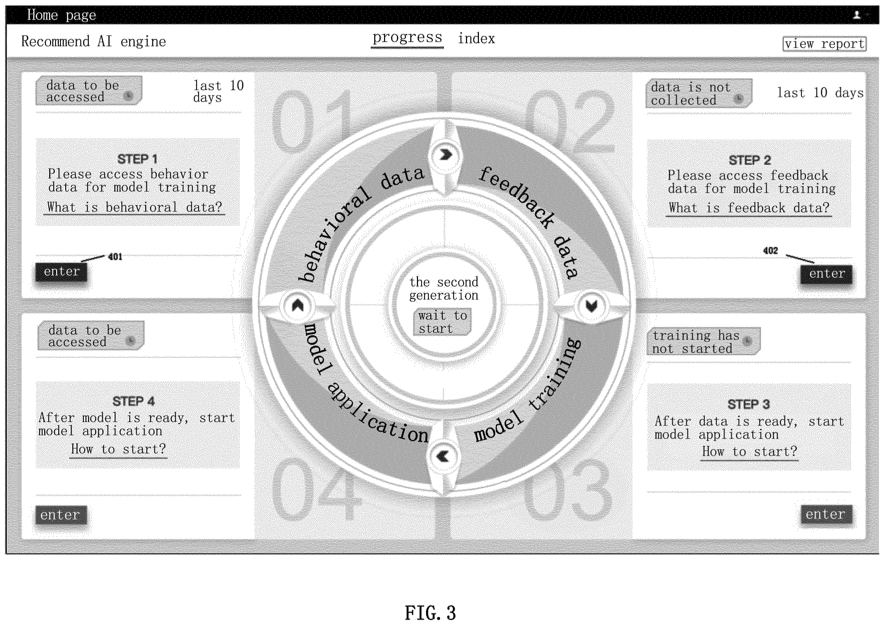

In order to enable those skilled in the art to better understand the disclosure, the disclosure will be described with reference to a flowchart of the method for performing machine learning process shown in FIG. 2 and graphical user interfaces shown in FIGS. 3 to 8. It should be noted that the order of steps shown in FIG. 2 is only used to exemplify the disclosure, and is not intended to limit the occurrence order of the steps, in fact, the steps in the exemplary implementation of the disclosure do not necessarily have a time sequence relationship, especially in the case of processing data that continuously flow in, they may be performed in any other suitable order, or completely or partially overlapping in time.

As shown in FIG. 2, in step S201, the data collecting unit 110 collects historical data, wherein the historical data is data accumulated historically, and these data have corresponding real results. In the following description, it is assumed that the historical data comes from an information service provider, who recommends information to consumers, the system 100 is designed to train a machine learning model for predicting whether consumers will accept the recommended information, and use an appropriate machine learning model for a prediction service providing the aforementioned predicted results. Here, the historical data may be imported into the system 100 in the form of a data table, a row of the data table represents one piece of a historical data record, each piece of the data record includes information and basic attribute information of the consumers (for example, information topics, information display locations, consumer identifiers, gender, age, height, weight, hobbies, etc.).

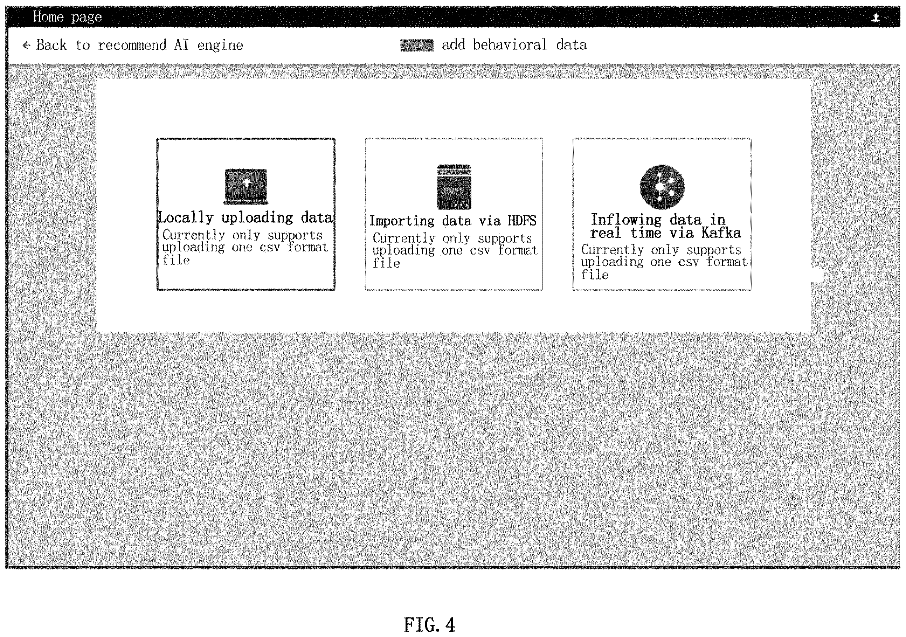

Specifically, in the graphical user interface(GUI) shown in FIG. 3, in order to import the historical data, the user may click the "enter" button 401 corresponding to behavioral data at the upper left of the GUI, and then enter a GUI shown in FIG. 4. In the interface shown in FIG. 3, in order to enable the machine learning process easier to be understand, the expression "behavioral data" is used to prompt the import of "historical data" and "prediction data", and the expression "feedback data" is used to prompt the import of real result data.

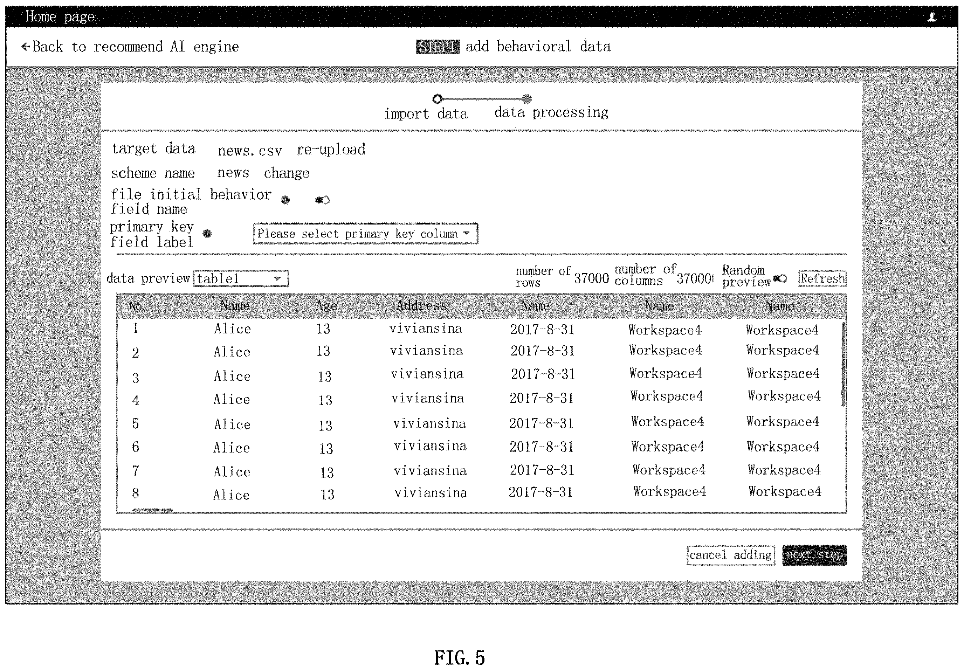

In FIG. 4, there are three ways to import the historical data, that is, uploading locally stored historical data to the system, importing the historical data via a Hadoop distributed file system (HDFS), and inflowing historical data in real time via Kafka (here, it should be noted that although the above three import ways are shown on the page, only one or more of them may be enabled according to specific application scenarios). For example, when the "locally uploading data" button shown in FIG. 4 is selected, the user may select the historical data that he wants to upload to the system from the locally stored historical data. FIG. 5 shows the historical data that has been selected by the user to be uploaded to the system, wherein the historical data table has 37000 rows and 37000 columns. In addition, in order to enable one-to-one correspondence between the historical data and actual results thereof, it is also required to configure information such as the unique ID of the historical data and the type of data column. When the user clicks "next step" in FIG. 5, the historical data may be uploaded to the system, that is, be collected by the data collecting unit 110.

In step S202, the real result collecting unit 120 may collect the real results of the historical data, where the real results of the historical data refers to the real label fields corresponding to the historical data records. In the above example, the real results refer to the real results that reflect whether the consumers have accepted the related information, for example, whether the consumers have clicked to read the historically recommended information. As an example, if a consumer clicks and browses at least one piece of historical information among the pieces of the historical information, but ignores the remaining pieces of the historical information, the real result corresponding to the at least one piece of the historical information all may be assigned a flag 1, and the real results corresponding to the remaining historical information all may be assigned a flag 0.

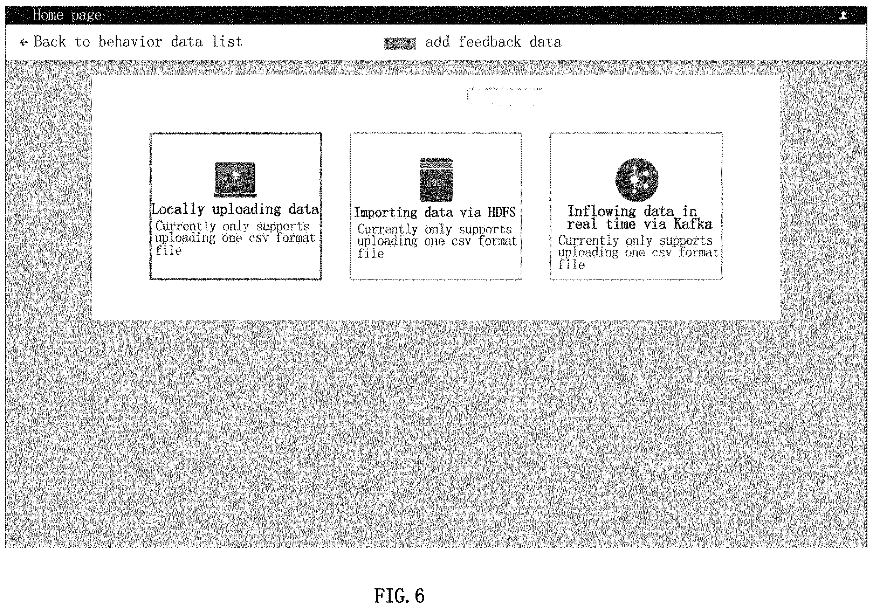

Specifically, as shown in FIG. 3, when the user clicks the "enter" button 402 corresponding to "feedback data" in the upper right of the GUI of FIG. 3, the GUI of FIG. 6 may be entered. As shown in FIG. 6, the real results may also be imported in three ways, that is, uploading the real results stored locally to the system, importing the real results via HDFS, and inflowing the real results in real time via Kafka (here, it should be noted that although the above three import ways are shown in the page, only one or more of them may be enabled according to the specific application scenarios). Since the way of importing the real results is similar to the way of importing historical data, here it will not be described in detail. In addition, in order to enable one-to-one correspondence between the historical data and the real results thereof, it is also required to configure information such as the unique ID of the real result corresponding to the historical data, the type of the data column, and so on. Through the above process, the user may upload the real results to the system and thus they can be collected by the real result collecting unit 120.

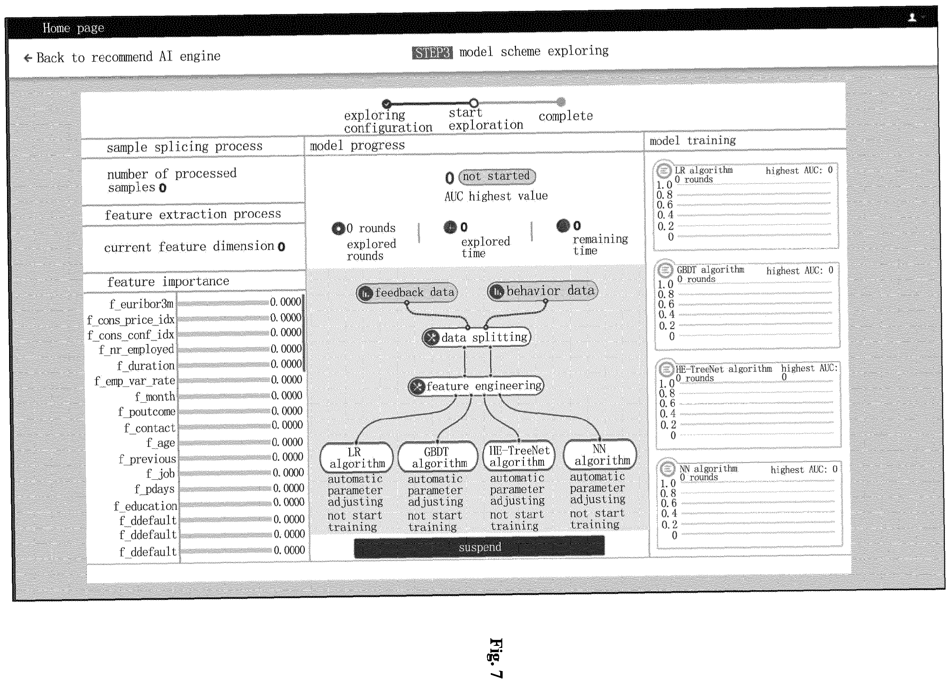

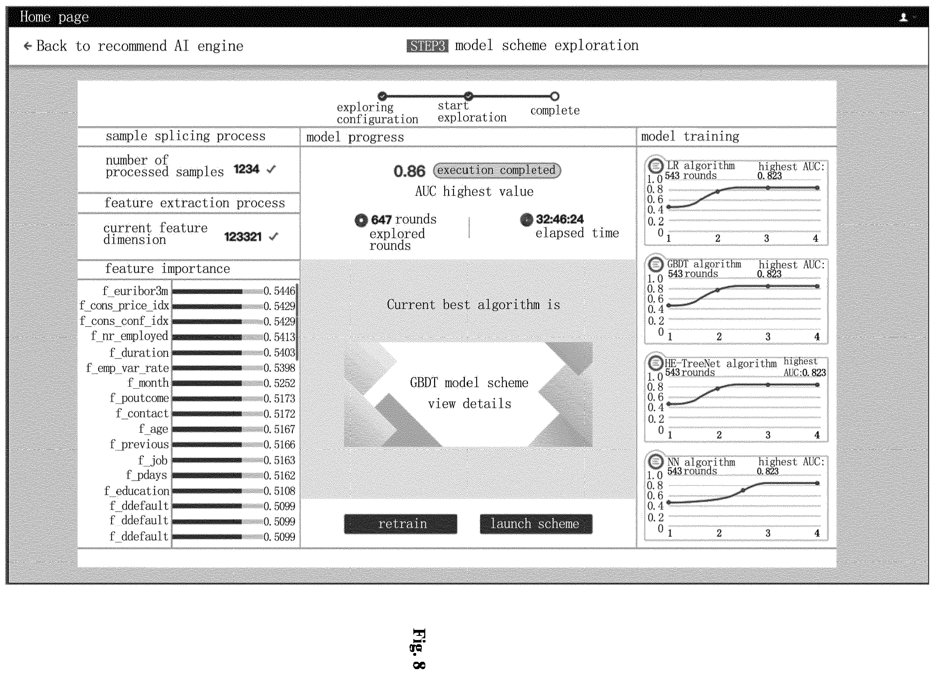

In step S203, the model auto-training unit 130 may generate initial training samples based on the collected historical data and corresponding real results thereof and train the initial machine learning model by using the initial training samples, according to the automatic machine learning technology. The initial training samples may be samples generated by combining features, that are obtained by performing feature extraction on the collected historical data according to the automatic machine learning technology, and the real results corresponding to the collected historical data, preferably, the initial training samples may be samples generated by combining various features, that are obtained by performing feature extraction and feature combination on the collected historical data according to the automatic machine learning technology, and the real results of the historical data. It should be noted that before the feature extraction, it is required to splice the historical data and the real results by using ID of the historical data and ID of the real results. Since the detailed process of generating the initial training samples has been described in detail above, it will not be repeated here. The automatic machine learning technology will be described in detail below with reference to FIGS. 7 and 8.

Specifically, the directed acyclic graph (DAG diagram) shown in the middle part of FIG. 7 shows 6 nodes: "feedback data" node, "behavioral data" node, "data splitting" node, and "feature engineering" node, "LR (logistic regression) algorithm" node, "GBDT (gradient boosting decision tree) algorithm" node, "HE-TreeNet (high-dimensional discrete embedded tree network) algorithm" node, and "NN (neural network) algorithm" node. It should be noted that FIG. 7 shows 4 specific preset algorithms, but this is only an exemplary illustration, the disclosure does not limit the number of preset algorithms and specific algorithms, in addition, the DAG diagram in FIG. 7 does not explicitly show all the contents involved in the automatic machine learning technology used by the model auto-training unit 130.

Referring to FIG. 7, through corresponding configuration at the "data splitting" node in the DAG diagram, the model auto-training unit 130 may split the historical data into the training data and the verification data. Thereafter, through corresponding configuration at the "feature engineering" node in the DAG graph, the model auto-training unit 130 may perform automatic feature generation on the split training data/validation data to extract at least one feature, preferably, the model auto-training unit 130 may also perform automatic feature combination after automatic feature generation to obtain various features including combined features. At four nodes corresponding to the lowest layer in the DAG graph (i.e., "LR algorithm" node, "GBDT algorithm" node, "HE-TreeNet algorithm" node and "NN algorithm" node), the model auto-training unit 130 may train the four preset algorithms (combining with automatic parameter adjusting) respectively by using the training samples/verification samples formed after the feature engineering, and then four machine learning models are trained, in the example, the model auto-training unit 130 trains four machine learning models according to the model automatic learning technology, but the exemplary embodiments of the disclosure are not limited thereto. In addition, in the example, the model auto-training unit 130 may select one or more machine learning models from the four machine learning models as the initial machine learning model according to factors such as model effect, etc., wherein, if multiple machine learning models are selected, the predicted results of these machine learning models may be synthesized to obtain the predicted results to be provided to outside. In addition, during the above processes, it is required to automatically configure system resources (for example, CPU, bandwidth, memory, etc.) according to a preset rule, for example, the system resources may be configured according to a data amount in conjunction with a rule, but the disclosure is not limited thereto.

As an example, it is assumed that the model auto-training unit 130 determines a scheme corresponding to the GBDT algorithm as the model training scheme, for example, the GBDT model training scheme shown in FIG. 8. In this case, the model auto-training unit 130 may retrain the GBDT model based on the entire historical data on which automatic data splitting is not performed (that is, including both the training set and the validation set) according to the model training scheme, to provide the predicted results online for the initial prediction data. Alternatively, the model auto-training unit 130 may not regenerate the machine learning model that initially provides the prediction service, but determine the initial machine learning model generated while determining the model training scheme during the automatic machine learning process as the initial online machine learning model. In this case, the initial machine learning model obtained in step S203 may be used as the initial online machine learning model for providing the online prediction service.

Although the model auto-training unit 130 only obtained one online machine learning model currently, after the online machine learning model is launched and an online prediction service is provided, the model auto-training unit 130 will continuously obtain updated machine learning models, for the service providing unit 140 to select an online machine learning model for providing the online prediction service.

As shown in FIG. 3, whenever an operation shown in FIG. 3 is completed, the corresponding graphic parts in the ring graphic in the center of FIG. 3 will change correspondingly, to remind the user that the process has been completed, for example, when the real results of the historical data is uploaded successfully, the "feedback data" graphic part in the circle graph in the center of FIG. 3 will change correspondingly to remind the users that the real result was uploaded successfully, that is, the real result collecting unit 120 has successfully collected the real results of the historical data.

So far, the exploring of the model training scheme, the training of the initial machine learning model, and the launch of the machine learning model have been completed. How to perform the online prediction service, data backflow, and updating of the machine learning model based on the online machine learning model is described below.

After the service providing unit 140 uses the initial machine learning model as the online machine learning model in step S203 to provide the online prediction service (that is, starting an prediction service), the user may utilize request API address of the prediction service to make a prediction service request, therefore, in step S204, the service providing unit 140 may determine whether a prediction service request including the prediction data is received.

If the prediction service request is not received, the judgment is continued in step S204.

If the prediction service request from the user is received, proceeding to step S205. For example, when the user wants to predict whether a variety of information, that he expects to recommend to the consumers, will be accepted by the consumers, the user may provide the service providing unit 140 with the prediction service request including the prediction data, to obtain a basis for determining which information to be recommended to the consumers, wherein the prediction data may include the information that the user expects to recommend to the consumers and basic attribute information of the consumers (for example, information topics, information display locations, consumer identifiers, gender, age, height, weight, hobbies, etc.), and in this case, it may proceed to step S205.

In step S205, the service providing unit 140 may automatically save the prediction data included in the prediction service request, and the data collecting unit 110 may continuously collect the prediction data from the service providing unit, wherein the collected prediction data (with corresponding real results) will be used to obtain the updated machine learning models by the model auto-training unit 130, which will be described in detail later. Through the step S205, the automatic backflow of data may be realized, thereby providing a necessary data source for the continuous loop of the automatic machine learning processes.

In step S206, the service providing unit 140 may provide a predicted result for the prediction data included in the prediction service request by using the online machine learning model, in response to the prediction service request including the prediction data

Specifically, in order to enable the online machine learning model to automatically perform feature engineering on the prediction data, metadata of a model file corresponding to the machine learning model obtained by the model auto-training unit 130 includes corresponding feature extraction process information, wherein, the feature extraction process information records how to perform feature extraction on the prediction data, thereby in step S206, the service providing unit 140 may utilize the feature extraction process information in the file corresponding to the online machine learning model to automatically perform feature extraction on the prediction data in the prediction service request, thereby obtaining a prediction sample, and provide a predicted result for the prediction sample by using the online machine learning model, that is, provide the predicted result to the user who sends the prediction service request.

Specifically, when the prediction data included in the prediction service request includes the information and the basic attribute information of consumers (for example, information topics, information display locations, consumer identifiers, gender, age, height, weight, hobbies, etc.), the service providing unit 140 may obtain the following predicted results by using the online machine learning model: a predicted result that it will be clicked to read is expressed as 1, and a predicted result that it will not be clicked to read is expressed as 0, on this basis, a probability that a consumer may click a certain pieces of information with respect to the information may be further provided, for example, 0.9, 0.85 or 0.76 and so on. Thereafter, the service providing unit 140 provides the predicted result to the user who sends the prediction service request, and the user may transmit several pieces of information most likely to be clicked by the consumers to the consumers according to the received predicted result.

In step S207, the real result collecting unit 120 may continuously collect real results of the prediction data, that is, continuously collect the real results from the user. As an example, the user may obtain real feedback on whether the consumers actually click a certain piece of information (for example, a certain piece of recommended information), that is, if a certain piece of information is clicked by the consumer to browse, the real result corresponding to the prediction data including the piece of information may be assigned a value of 1, if the piece of information is not clicked and browsed by the consumer, the real result corresponding to the prediction data including the information may be assigned a value of 0. Through this process, the automatic backflow of the real result of the prediction data may be realized, thereby providing a necessary data source for the continuous loop of the automatic machine learning processes.

In step S208, the model auto-training unit 130 may generate updated training samples based on the collected prediction data and corresponding real results and continuously obtain updated machine learning models by using the updated training samples, according to a configured model updating scheme, wherein the configured model updating scheme may be generated by the model auto-training unit 130 on the basis of the model training scheme based on which the initial machine learning model is trained, the model updating scheme may also include at least one of: a data selecting rule for selecting prediction data used to generate the updated training samples from the prediction data, and a model updating cycle, a model storage location, and a updating resource auto-configuration manner for updating the machine learning model by the model auto-training unit, wherein the above included in the model updating scheme may be manfully set in the system.

For example, the model updating cycle may be set to 1 week, the data selecting rule may be set to select data according to a time range (for example, a data range is set to "last 7 days"), and the model storage location may be set to the model center inside the system 100, and the updating resource auto-configuration manner is set to configure the resources according to the data amount in conjunction with a rule.

On this basis, when it needs to perform model updating according to the model updating cycle, after the system resource configuration is performed according to the updating resource auto-configuration manner, the model auto-training unit 130 may select the data within a specific range from the collected prediction data and corresponding real results thereof according to the set data selecting rule, perform feature extraction on the selected data, and preferably, may further perform feature combination, and then based on the full learning method, obtain a new machine learning model by performing model training using the updated training samples formed after the feature extraction according to the model training program in the model updating scheme, and finally, store the new obtained machine learning model in a location indicated by the model storage location.

Alternatively, when it needs to perform model updating according to the model updating cycle, after the system resource configuration is performed according to the updating resource auto-configuration manner, the model auto-training unit 130 may select the prediction data and perform feature extraction according to the configured model updating scheme, and preferably, may further perform feature combination, and then based on the incremental learning manner, perform incremental learning on the original machine learning model by using the updated training samples formed after the feature extraction , thereby obtaining an updated machine learning model, and then store the updated machine learning model in a location indicated by the model storage location.

It should be noted that the system may be designed to generate the updated machine learning model only in a full learning manner, or designed to generate updated machine learning model only in an incremental learning manner, or designed to determine which of the full learning method and the incremental learning method is used to generate the updated machine learning model based on prediction effect of the current model, but the disclosure is not limited thereto, and any learning manner that may generate the updated machine learning model may be used in the disclosure.

Through step S208, an updated machine learning model may be obtained for the service providing unit 140 to select to provide the online prediction service.

After the step S208, proceeding to step S209, and the service providing unit 140 may select an online machine learning model for providing the online prediction service from among the machine learning models obtained by the model auto-training unit 130 according to the configured model application scheme.

Specifically, the service providing unit 140 may select one or more machine learning models as the online machine learning model from the machine learning models obtained and stored by the model auto-training unit 130 according to the model selecting rule included in the model application scheme, wherein the model selecting rule may include a rule for selecting the machine learning model with the highest AUC, a rule for selecting the newly generated machine learning model or the like. For example, the service providing unit 140 may select the machine learning model with the highest AUC from the stored machine learning models as the online machine learning model according to the AUC value.

After the step S209, returning to step S204, the service providing unit 140 continues to determine whether the prediction service request is received. If the prediction service request is received, the service providing unit 140 uses the newly selected machine learning model as the online machine learning model to provide the online prediction service. Otherwise, the service providing unit 140 returns to the step S204 to continue the determination. From the above description, once the service providing unit 140 uses the selected machine learning model to provide the online prediction service, the method in FIG. 2 may always form a closed loop according to the cyclic process described with reference to FIG. 2, so that the closed loop may be automatically and continuously operated and updated.

### <Embodiment 2>

### <Embodiments of methods>

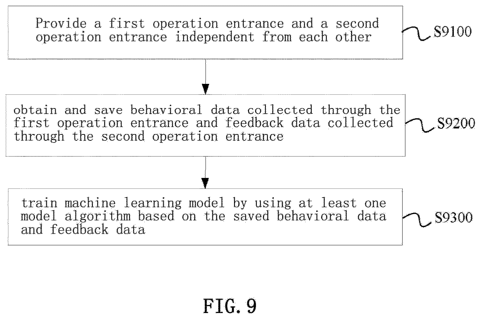

FIG. 9 shows a schematic flowchart of a method for performing machine learning process according to another embodiment of the disclosure. The method may be performed by at least one computing device, and the at least one computing device may be all built as a local device or as a cloud device (for example, a cloud server), and may also include both the local device and the cloud device (for example, both a local client and a cloud client).

Step S9100, a first operation entrance and a second operation entrance independent from each other are provided.

The first operation entrance is used to collect behavioral data that is a basis of model prediction, and the second operation entrance is used to collect feedback data that is real results of the behavioral data.

The behavioral data relates to a feature part of training data and may be imported by users according to different paths, such as uploading locally stored data to the system, regularly importing data via HDFS, and inflowing data in real-time via Kafka. Here, the initially imported data will limit the schema of the entire data, when new data is subsequently imported, the schema will be verified, so that only data forms with the same schema content are accepted. When the imported behavioral data is placed on the disk, it will be converted into the specific format of a corresponding data group, as a data slice in the data group, and the feedback data also adopts the same mechanism.

Exemplarily, in the GUI shown in FIG. 3, the first operation entrance may be the corresponding "enter" button 401, the second operation entrance may be the corresponding "enter" button 402, and the first operation entrance and the second operation entrance are two operation entrances independent from each other, wherein the first operation entrance is used to collect the behavioral data, and the second operation entrance is used to collect the feedback data that is the real results of the behavioral data.

Step S9200, the behavioral data collected through the first operation entrance and the feedback data collected through the second operation entrance are acquired and saved.

In this embodiment, the acquiring and saving the behavioral data collected through the first operation entrance and the feedback data collected through the second operation entrance in the step S9200 may further include the following steps S9210 to S9230:
Step S9210, in response to a triggering operation on any one of the first operation entrance and the second operation entrance, at least one data import path is provided for selection.

Exemplarily, in the GUI shown in FIG. 3, in order to import the behavioral data, the user may click the "enter" button 401 corresponding to the behavioral data at the upper left of the GUI, and then enter the GUI shown in FIG. 4. In FIG. 4, the behavioral data may be imported through three import ways, that is, uploading the locally stored data to the system, regularly importing data via HDFS, and inflowing data in real time via Kafka.

Similarly, in order to import the feedback data, the user may click the "enter" button 402 corresponding to the feedback data at the upper right of the GUI shown in FIG. 3, and then enter the GUI shown in FIG. In FIG 6, the feedback data may also be imported through three import ways, that is, uploading locally stored data to the system, regularly importing data via HDFS, and inflowing data in real time via Kafka.

Step S9220, the behavioral data or feedback data is imported from the selected data import paths.

It is understood that although the above three import ways are shown on the corresponding pages with respect to the behavioral data and feedback data, only one or more of them may be enabled according to specific application scenarios. The embodiment is not limited thereto.

In the embodiment, the importing the behavioral data or feedback data from the selected data import path in the step S9220 may further include the following steps S9221 to S9222:
Step S9221, after the data import path is selected, a configuration interface for information configuration of the imported data is provided.

Exemplarily, taking importing the behavioral data as an example, after the user selects the "locally uploading data" button shown in FIG. 4, the user may select the behavioral data that he wants to import into the system from the locally stored data. FIG. 5 shows the data that has been selected by the user to be imported into the system, and, in FIG. 5, a configuration interface for information configuration of the data selected by the user to be imported into the system is provided, specifically, the configuration interface may provide configuration information such as target data, scheme names, file initial behavior field names, primary key field labels, and data preview, in addition, the configuration interface further provides the number of rows and columns of a data table, the data table in FIG. 5 has a total of 37000 rows and 37,000 columns.

Step S9222, the behavioral data or feedback data is imported according to the configuration information input through the configuration interface.

As shown in FIG. 5, taking the importing of behavioral data as an example, in order to enable one-to-one correspondence between the behavioral data and the feedback data, it needs to configure information such as the unique ID of the behavioral data and the type of data column. When the user clicks "next step" in FIG. 5, the behavioral data may be imported into the system.

Step S9230, the imported behavioral data or feedback data is saved.

In the embodiment, with respect to the behavioral data or feedback data imported for the first time, and with respect to the behavioral data or feedback data imported subsequently, two different saving manners are provided, here, the saving of the imported behavioral data or feedback data in step S9230 may further include:
Case 1: structure extraction is performed with respect to the behavioral data or feedback data imported for the first time, and the behavioral data or feedback data is saved as the first data slice under a behavioral data group or a feedback data group.
Case 2: structural verification is performed with respect to the behavioral data or feedback data imported subsequently, and the verified behavioral data or feedback data is saved as subsequent data slices under the behavioral data group or the feedback data group.

Step S9300, based on the saved behavioral data and feedback data, at least one model algorithm is used to train the machine learning model.

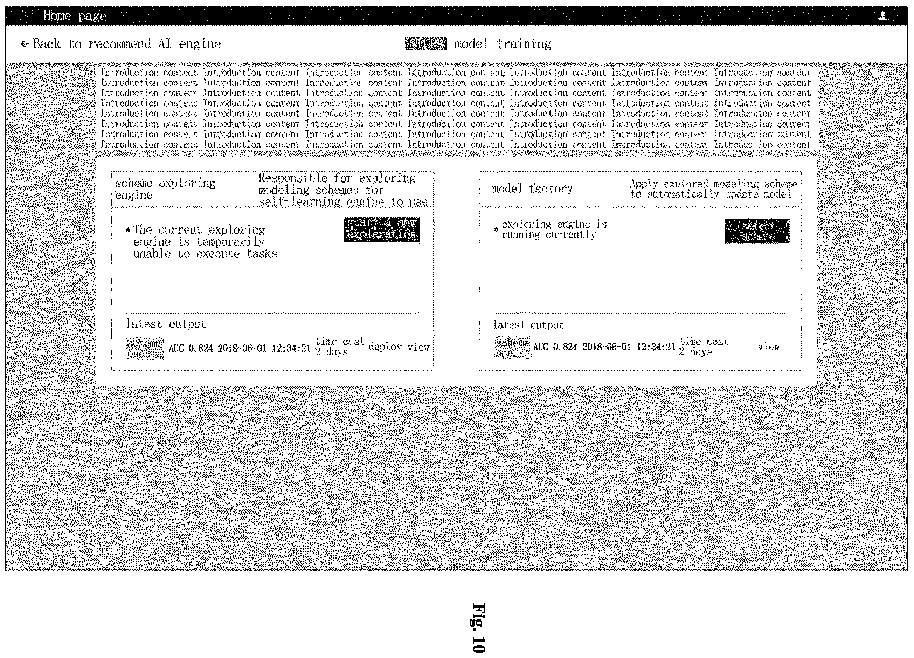

In the embodiment, a third operation entrance independent from the first operation entrance and the second operation entrance is further provided, and the third operation entrance is used to perform configuration regarding model training. Specifically, in the GUI shown in FIG. 3, the user may click the "enter" button corresponding to model training at the bottom right of the GUI, and then enter the GUI shown in FIG 10.

In this embodiment, the training the machine learning model by using at least one model algorithm based on the saved behavioral data and feedback data in step S9300 may further include the following steps S9310 to S9320:
Step S9310, the configuration information input through the third operation entrance is obtained.

The configuration information input through the third operation entrance relates to a configuration for exploring model training scheme and a configuration of self-learning on the basis of an existing model training scheme.

The configuration for exploring model training scheme includes configuration for information of any one or more of: a behavioral data selecting rule, a feedback data selecting rule, a scheme exploring stop strategy, automatic data splitting (training/validation), a proportion of a training set, and the random seeds.

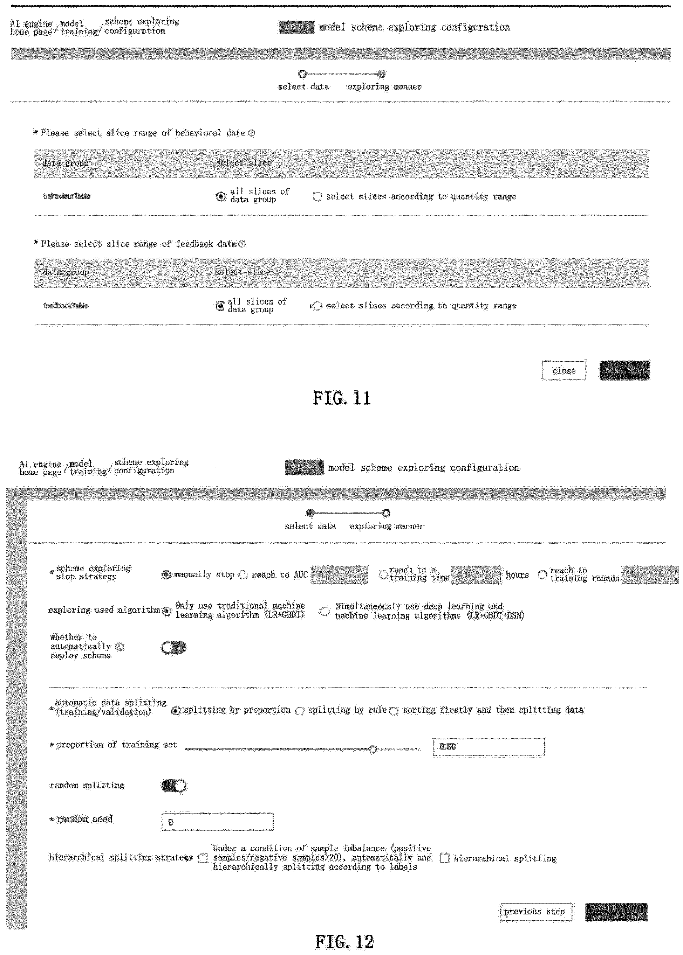

Exemplarily, in FIG. 10, the scheme exploring engine shown on the left is used to configure the exploring of model training scheme, in the case where the user performs scheme exploring for the first time, it may perform configuration for exploring model training scheme by clicking the "start a new exploration" button in the GUI corresponding to the configuration for exploring the model training scheme. Specifically, after the "start a new exploration" button is clicked, entering into the GUI shown in FIG. 11, in the FIG. 11, a slice range for selecting the behavioral data is provided, the user may select "all slices of the data group" , the user may also select "selecting slices according to quantity range", for example, the 20th slice data ~ the 200th slice data are selected, and a slice range for selecting the feedback data is further provided, the user may select "all slices of the data group" or the user may further select "selecting slices according to quantity range", for example, the 20th slice data ∼ the 200th slice data are selected, after "next step" is clicked, and entering into the GUI shown in FIG. 12, in FIG. 12, a configuration of scheme exploring stop strategy is provided, the user may select "manually stop", "reach to AUC", "reach to a training time" and "reach to training rounds", and the configuration of automatic data splitting (training/validation) is also provided, the user may select "splitting by proportion", "splitting by rule" and "sorting firstly and then splitting data", and the proportion of the training set is further provided, the user may set the proportion to "0.8" and so on.

The configuration of self-learning on the basis of the existing model training scheme includes at least one configuration of manually self-learning once and information configuring a timed self-learning plan, wherein the configuration of manual self-learning once includes configuration of information of data source and data slices selection; the configuration of the timed self-learning plan includes the configuration of information of any one or more of the self-learning period, self-learning data, and self-learning results.

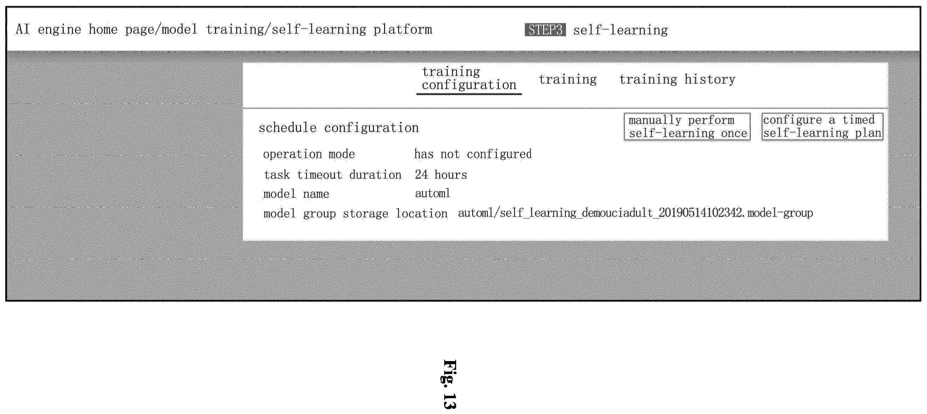

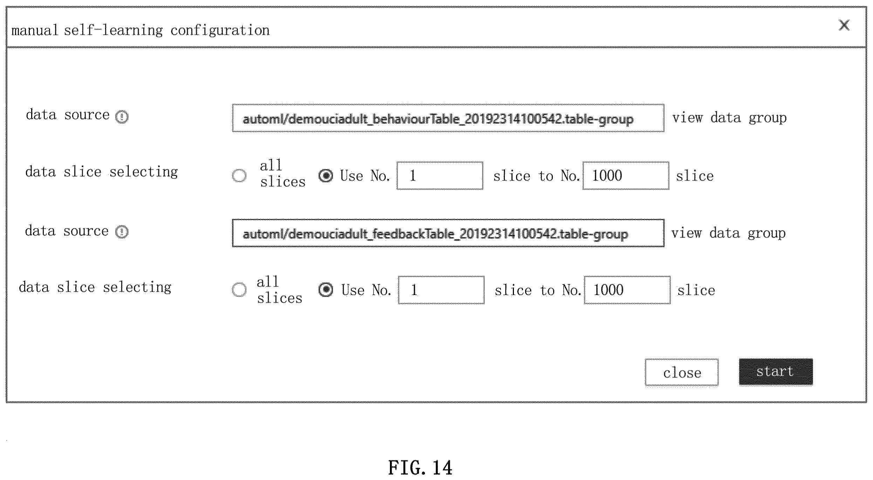

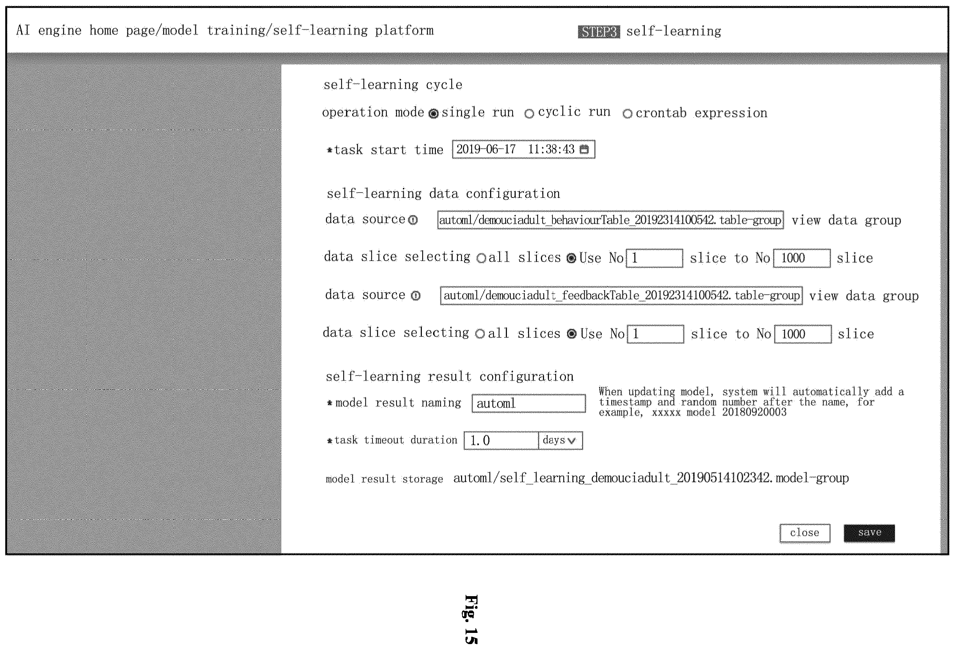

Exemplarily, in FIG. 10, the model factory shown on the right is used for configuration of self-learning based on the existing model training scheme, which may be a configuration in which the "select scheme" button, corresponding to self-learning based on the existing model training scheme, in the GUI is clicked to perform the self-learning on the basis of the existing model training scheme. Specifically, after the "select scheme" button is clicked, entering into a GUI shown in FIG. 13. In FIG. 13, the "manually perform a self-learning once" configuration button is provided, and the "configure a timed self-learning plan" configuration button is provided, the user may click the "manually perform a self-learning once" button, and then enter a GUI shown in FIG. 14. In FIG. 14, the user may select the data source or data slice selecting; or click "configure a timed self-learning scheme", and then enter a GUI shown in FIG. 15. In Fig. 15, a configuration of a self-learning cycle is provided, the user may select the operating mode as "single run", "cyclic run" and "crontab expression", and select a task start time as "2019-06-17 11:38:43", and a self-learning data configuration is further provided, the users may perform selection of data source, data slices, model naming result, and task timeout duration, etc.

Step S9320, according to the configuration information input through the third operation entrance, the saved behavioral data and feedback data are spliced into training data, training samples are generated by performing feature engineering (for example, feature extraction) on the training data, and machine learning model is trained by using at least one model algorithm based on the training samples.

In the embodiment, the generating of the training samples based on the saved behavioral data and feedback data and the training of the machine learning model by using the training samples may splice the ID of the saved behavioral data and the ID of the feedback data to form the training data, and perform feature engineering (for example, including feature extraction and/or feature combination, etc.) on the training data to generate the training samples. Specifically, the training data obtained after splicing may be stored in the form of a data table. Generally, a row of the data table may correspond to a data record, and a column of the data table may correspond to a attribute field. Each data record in the data table may include one or more attribute information (i.e., attribute fields). The attribute fields may be used to form features, and the features are components of the training samples. Here, the features may be the attribute fields themselves or a part of the attribute fields, a combination of attribute fields, or the results of the attribute fields after processing (or operation). Different features may be further combined.

Exemplarily, the directed acyclic graph (DAG diagram) shown in the middle part of FIG. 7 shows 6 nodes: "feedback data" node, "behavioral data" node, "data splitting" node, "feature engineering" node, "LR (logistic regression) algorithm" node, "GBDT (gradient boosting decision tree) algorithm" node, "HE-TreeNet (high-dimensional discrete embedded tree network) algorithm" node and "NN (neural network) algorithm" node. It should be noted that FIG. 7 shows 4 specific preset algorithms, but this is only an exemplary description, and the disclosure does not limit the number of preset algorithms and specific algorithms.

Referring to FIG. 7, through the corresponding configuration at the "data splitting" node in the DAG diagram, the training data obtained after the splicing of the behavioral data and the feedback data may be split into a training set and a validation set. Thereafter, through the corresponding configuration at the "feature engineering" node in the DAG diagram, automatic feature generation may be performed on the training set and the validation set to extract at least one feature to generate a training sample. At the three nodes corresponding to the lowest layer in the DAG diagram (i.e. "LR algorithm" node, "GBDT algorithm" node, "HE-TreeNet algorithm" node and "NN algorithm" node), the training samples is utilized to perform at least one round of training with respect to the four preset algorithms, respectively, and then the corresponding multiple machine learning models are trained.

Further, in the embodiment, the following process may be visually displayed to the users: according to the configuration information related to the configuration of the exploring model training scheme, splicing the saved behavioral data and feedback data into training data, and generating the training samples by performing feature engineering (for example, feature extraction) on the training data, and training the machine learning model by using at least one model algorithm based on the training samples.

The step of visually showing the following process to the users includes showing at least one of: showing the data processing progress of splicing the saved behavioral data and feedback data into the training data to the users, showing the feature dimensions and/or feature importance, which are involved in the process of generating the training samples by perform feature extraction on the training data to generate training samples, to the users, showing the number of rounds of model exploring experiments, running time and/or effect indexes to the users, showing the algorithm of model training and effect indexes thereof to the users, showing a schematic diagram of the process of exploring model training scheme to the users.

According to the method of the embodiment, it provides an operation entrance for collecting the behavioral data and an operation entrance for collecting the feedback data, respectively, so as to import the behavioral data and feedback data into the system respectively, so that users may complete the auto-training processes of machine learning models in an easy-to-understand interactive manner.

In one embodiment, a fourth operation entrance independent from the first operation entrance and the second operation entrance is further provided, and the fourth operation entrance is used to perform configuration regarding the providing of the prediction service by using machine learning model.

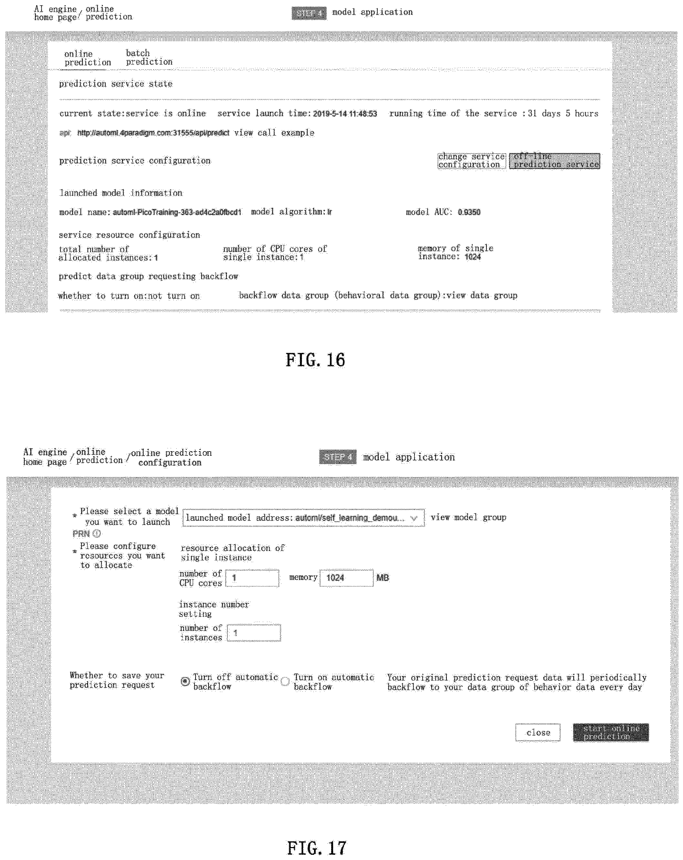

Exemplarily, in the GUI shown in FIG. 3, the user may click the "enter" button corresponding to model application at the bottom left of the GUI, and then enter a GUI shown in FIG. 16.

In the embodiment, the method for performing machine learning processes of the disclosure further includes the following steps S9400 to S9500:
Step S9400, configuration information input through the fourth operation entrance is obtained.

The configuration information input through the fourth operation entrance relates to the providing of the online prediction service and/or batch prediction service by using the machine learning model. In FIG. 16, an "online prediction" button corresponding to the online prediction service and a "batch prediction " button corresponding to the batch prediction service are provided, respectively.

The configuration information related to the online prediction service includes changing the configuration of the service, for example, at least one of the configuration of selecting the model required to be launched and information on the allocated resources; and, the configuration information related to the batch prediction service includes a configuration of editing the prediction service, for example, a configuration of selecting information of the machine learning model required to be launched.

Step S9500, based on the configuration information input through the fourth operation entrance, a prediction service is provided by using the machine learning model.

In the embodiment, the configuration information input through the fourth operation entrance relates to provide the online prediction service and/or batch prediction service by using the machine learning model, herein, the providing of the prediction service by using the machine learning model based on the configuration information input through the fourth operation entrance in step S9500 may further includes:
Based on the configuration information related to the online prediction service and/or the configuration information related to the batch prediction service input through the fourth operation entrance, the online prediction service and/or the batch prediction service is provided by using the machine learning model.

Continuing the above example, one or more machine learning models may be selected from the multiple machine learning models trained above as the machine learning model for providing the prediction service according to factors such as model effects, wherein if multiple machine learning models are selected, the predicted results of these machine learning models may be combined to obtain a predicted result to be provided to outside.

In the embodiment, the providing of the online prediction service by using the machine learning model based on the configuration information related to the online prediction service input through the fourth operation entrance includes:
Step S9510, a prediction service request including prediction data is received through the API address set in the configuration information.

The user may utilize the request API address of the prediction service to make a prediction service request.

Step S9520, in response to the received prediction service request, the predicted results for the prediction data are obtained by using the machine learning model, and the predicted results are transmitted through the API address.

In the embodiment, the configuration information related to the online prediction service input through the fourth operation entrance also include on-off state of the automatic backflow of the prediction data, herein, the method for performing the machine learning process of the disclosure further includes:
When the on-off state is on, the prediction data included in the prediction service request is saved in the corresponding behavioral data group.

In the GUI shown in FIG. 17, an option regarding whether to save your prediction request is provided, when the user selects the "turn off automatic backflow" button, the prediction data in the prediction service request will not be saved in the corresponding behavioral data group, when the user selects the "turn on automatic backflow" button, the prediction data included in the prediction service request will be saved in the corresponding behavioral data group. Through this process, the automatic backflow of the behavioral data may be realized, which provides a necessary data source for the continuous loop of the automatic machine learning process.

In one embodiment, all operation entrances are provided on the same interactive interface.

As an example, the first operation entrance, the second operation entrance, the third operation entrance, and the fourth operation entrance are all provided in the GUI as shown in FIG. 3, wherein the first operation entrance may be the "enter" button 401 corresponding to the behavioral data at the upper left of the GUI, and may also be the "behavioral data" graphic in the circle graphic in the center of the GUI; the second operation entrance may be the "enter" button 402 corresponding to the feedback data the at the upper right of the GUI, and may also be the "feedback data" graphic in the ring graphic at the center of the GUI; the third operation entrance may be the "enter" button 402 corresponding to model training at the lower right of the GUI, and may also be the "model training" graphic in the ring graphic at the center of the GUI, and the fourth operation entrance may be the "enter" bottom corresponding to model application at the lower left of the GUI, and may also be the "model application" graphic in the ring graphic at the center of the GUI.

In one embodiment, the method for performing machine learning process of the disclosure further includes the following steps S10011 to S10013:
Step S10011, an information display area corresponding to each operation entrance is provided on the interactive interface.

In the graphical interface shown in FIG. 3, the first operation entrance may be the "enter" button 401 corresponding to the behavioral data at the upper left of the GUI, and the information display area corresponding to the first operation entrance may be information displayed above the "enter" button 401; the second operation entrance may be the "enter" button 402 corresponding to the feedback data at the upper right of the GUI, and the information display area corresponding to the second operation entrance may be information displayed above the "enter" button 402; the third operation entrance may be the "enter" button corresponding to model training at the bottom right of the GUI, and the information display area corresponding to the third operation entrance may be the information displayed above the "enter" button corresponding to model training, and, the fourth operation entrance may be the "enter" button corresponding to model application at the bottom left of the GUI, and the information display area corresponding to the fourth operation entrance may be information displayed above the "entry" button corresponding to model application.

Step S10012, current operation state information corresponding to each operation entrance is acquired.

Step S10013: the information display area corresponding to each operation entrance is configured to display the current operation state information of the corresponding operation entrance.

As shown in FIG. 3, for example, when the behavioral data is not uploaded, at least "data to be accessed" is displayed at the upper right of the "enter" button 401 corresponding to the behavioral data at the upper left of the GUI for another example, when the feedback data is not uploaded, at least "data is not collected" is displayed at the upper right of the "enter" button 401 corresponding to the behavioral data at the upper left of the GUI.

In addition, the current operation state information may further include information about operation objects (for example, the behavioral data, the feedback data, the model scheme, and the prediction request), operation content, and/or operation result involved in each operation.

In one embodiment, the method for performing machine learning process of the disclosure further includes the following steps S 10021 to S10023:
In step S 10021, for each operation entrance, its corresponding progress indicating bar is provided.

In the embodiment, each operation entrance is set to be used as its corresponding progress indicating bar at the same time. Exemplarily, in the GUI shown in FIG. 3, the first operation entrance may be the "behavioral data" graphic in the ring graphic at the center of the GUI, and the "behavioral data" graphic may be directly used as the progress indicating bar corresponding to the first operation entrance; the second operation entrance may be the "feedback data" graphic in the ring graphic in the center of the GUI, and the "feedback data" graphic may be directly used as the progress indicating bar corresponding to the second operation entrance; the third operation entrance may be the "model training" graphic in the ring graphic in the center of the GUI, and the "model training" graphic may be directly used as the progress indicating bar corresponding to the third operation entrance, and, the fourth operation entrance may be a "model application" graphic in the circular graphic at the center of the GUI, and the "model application" graphic may be directly used as a progress indicating bar corresponding to the fourth operation entrance.

Step S10022, for each operation entrance, the current progress of performing a corresponding operation is detected.

Step S10023, according to the detected current progress, the display state of the corresponding progress indicating bar is controlled.

As shown in FIG. 3, whenever an operation shown in FIG. 3 is completed, the corresponding graphic part in the ring graphic in the center of FIG. 3 will change correspondingly to remind the users that the process has been completed, for example, when the behavioral data is uploaded successfully, the "behavioral data" part of the circle in the center of FIG. 3 will change correspondingly, to remind the users that the behavioral data was uploaded successfully; for another example, when the feedback data is uploaded successfully, the "feedback data" graphic part in the circle graphic at the center of FIG 3 will change correspondingly, to remind the users that the feedback data was uploaded successfully.

### <System embodiment

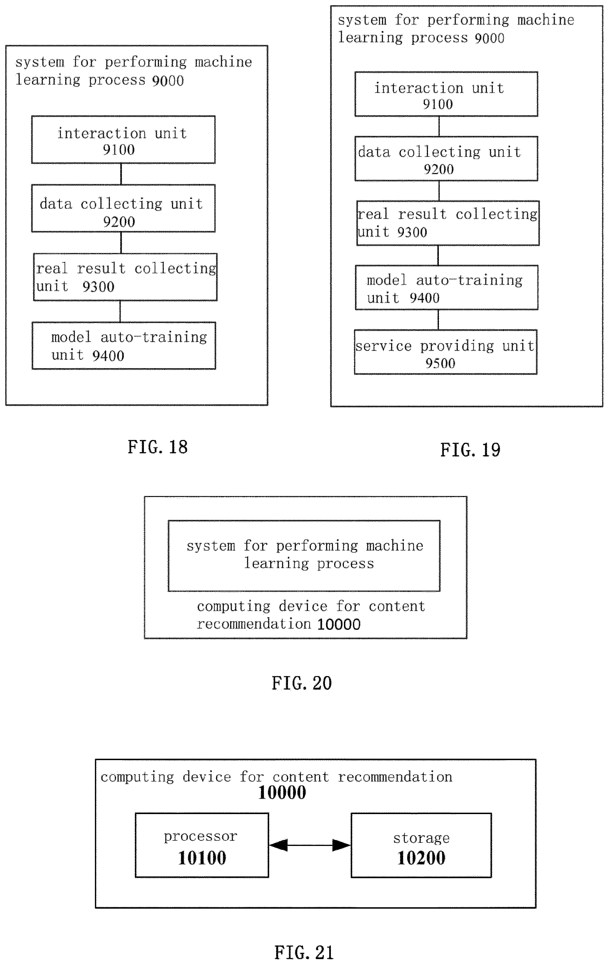

In this embodiment, a system 9000 for performing machine learning process is also provided. As shown in FIG. 18, the system 9000 for performing machine learning process includes an interaction unit 9100, a data collecting unit 9200, and a real result collecting unit 9300 and the model auto-training unit 9400.

The interaction unit 9100 is used to provide a first operation entrance and a second operation entrance independent from each other, wherein the first operation entrance is used to collect behavioral data that is a basis of model prediction, and the second operation entrance is used to collect feedback data that are the real results of the behavioral data.

The data collecting unit 9200 is used to acquire and save the behavioral data collected through the first operation entrance.

The real result collecting unit 9300 is used to acquire and save the feedback data collected through the second operation entrance.

The model auto-training unit 9400 is used to train a machine learning model by using at least one model algorithm based on the stored behavioral data and feedback data.

In one embodiment, the data collecting unit 9200 is further used to: provide at least one data import path for selection, in response to a trigger operation for the first operation entrance; import the behavioral data from the selected data import path; and save the imported behavioral data.

The real result collecting unit 9300 is further used to: provide at least one data import path for selection, in response to a trigger operation for the second operation entrance; import the feedback data from the selected data import path; and save the imported feedback data.

In one embodiment, the data collecting unit 9200 is further used to: provide a configuration interface for information configuration of the imported data after the data import path is selected; and according to the configuration information input through the configuration interface, import the behavioral data.

The real result collecting unit 9300 is further used to: provide a configuration interface for information configuration of the imported data after the data import path is selected; and according to the configuration information input through the configuration interface, import the feedback data.

In one embodiment, the data collecting unit 9200 is further used to: perform structure extraction for the behavioral data imported for the first time, and save the behavioral data as the first data slice under a behavioral data group; and perform structure verification on subsequently imported behavioral data and save the verified behavioral data as subsequent data slices under a behavioral data group.

The real result collecting unit 9300 is further used to: perform structure extraction on the feedback data imported for the first time, and save the feedback data as the first data slice under a feedback data group; and perform structure verification on the subsequently imported feedback data, and save the verified feedback data as subsequent data slices under a feedback data group.

In one embodiment, the interaction unit 9100 is further used to provide a third operation entrance independent from the first operation entrance and the second operation entrance, and the third operation entrance is used to perform configuration regarding model training.

The model auto-training unit 9400 is also used to: obtain configuration information input through the third operation entrance; according to the configuration information input through the third operation entrance, splice the saved behavioral data and feedback data into training data, generate training samples by performing feature extraction on the training data, and train a machine learning model by using at least one model algorithm based on the training samples.

In one embodiment, the configuration information input through the third operation entrance relates to a configuration of exploring model training scheme and/or a configuration of self-learning on the basis of an existing model training scheme.

In one embodiment, the model auto-training unit 9400 is further used to visually display the following process to the users: according to the configuration information related to the configuration of exploring model training scheme, splicing the saved behavioral data and feedback data into training data, generating training samples by performing feature extraction on training data, and training the machine learning model by using at least one model algorithm based on the training samples.

In one embodiment, the interaction unit 9100 is further used to provide a fourth operation entrance independent from the first operation entrance and the second operation entrance, the fourth operation entrance is used to perform a configuration regarding the providing of a prediction service by using the machine learning model.

As shown in FIG. 19, the system 9000 for performing machine learning process may further include a service providing unit 9500.

The service providing unit 9500 is used to provide prediction service by using a machine learning model, based on the configuration information input through the fourth operation entrance.

In one embodiment, the configuration information input through the fourth operation entrance relates to the providing of online prediction service and/or batch prediction service by using the machine learning model.

In one embodiment, the service providing unit 9500 is further used to provide online prediction service and/or batch prediction service by using the machine learning model, based on the configuration information related to the online prediction service and/or configuration information related to the batch prediction service input through the fourth operation entrance.

In one embodiment, the service providing unit 9500 is further used to: receive a prediction service request including prediction data through the API address set in the configuration information; in response to the received prediction service request, obtain a predicted result for the prediction data by using the machine learning model, and transmit the predicted result through the API address.

In one embodiment, the configuration information related to the online prediction service input through the fourth operation entrance further includes an on-off state of automatic backflow of the prediction data.

The service providing unit 9500 is further used to save the prediction data included in the prediction service request in the corresponding behavioral data group in case of the on-off state is on.

In one embodiment, all operation entrances are provided on a same interactive interface.

In one embodiment, the system 9000 for performing machine learning process may further include an operation state display unit.

The operation state display unit 9600 is used to: provide an information display area corresponding to each operation entrance on the interactive interface; obtain current operation state information corresponding to each operation entrance; configure the information display area corresponding to each operation entrance, display the current operation state information of the corresponding operation entrances.

In one embodiment, the system 9000 for performing machine learning process may further include a progress display unit.

The progress display unit 9700 is used to: for each operation entrance, provide a progress indicating bar corresponding to the operation entrance, respectively; for each operation entrance, detect the current progress of performing the corresponding operation; and according to the detected current progress, control the display state of the corresponding progress indicating bar.

In one embodiment, the progress display unit 9700 is also used to set the each operation entrance to be used as its corresponding progress indicating bar at the same time.

### <Device embodiment

In the embodiment, a computing device for performing machine learning process 10000 is also provided.

As shown in FIG. 20, a computing device 10000 for performing machine learning process may include a system for performing machine learning process, for example, it may be the system 100 for performing machine learning process shown in FIG. 1, or it may be the system 9000 for performing machine learning process shown in FIG. 18 or 19, it is not limited here.

In another embodiment, as shown in FIG. 21, the computing device 10000 for performing machine learning process may further include a processor 10100 and a storage part 10200, the storage part 10200 stores a set of computer executable instructions, the computer executable instructions, when executed by the processor 10100, cause the processor 10100 to execute the method for performing machine learning process according to the second embodiment of the disclosure.

### <Computer readable storage medium>

In the embodiment, a computer-readable storage medium is also provided, on which a computer program is stored, and the computer program, when executed by a processor, implements the reading information processing method as in any embodiment of the disclosure.

The units included in the system for performing machine learning process according to an exemplary embodiment of the disclosure may be respectively configured as software, hardware, firmware, or any combination thereof to perform specific functions. For example, these units may correspond to dedicated integrated circuits, may also correspond to pure software codes, and may also correspond to modules combining software and hardware. In addition, one or more functions implemented by these units may also be uniformly executed by components in a physical equipment (for example, a processor, a client, or a server, etc.).

It should be understood that the method for performing machine learning process according to an exemplary embodiment of the disclosure may be implemented by a program recorded on a computer-readable medium, for example, according to an exemplary embodiment of the disclosure, a computer-readable storage medium storing instructions may be provided, wherein, the instructions, when executed by at least one computing device, cause the at least one computing device to execute the computer program of each step in the method for performing machine learning process.

The computer program in the above-mentioned computer-readable medium may be executed in an environment deployed in computer equipment such as a client, a host, an agent device, a server, etc., it should be noted that when executing above processing, the computer program may also be used to execute more particular processing, the content of these further processing has been described with reference to FIGS. 2 to 8, and it will not be repeated herein in order to avoid redundancy.

It should be noted that the system for performing machine learning process according to the exemplary embodiment of the disclosure may completely rely on the execution of the computer program to realize a corresponding function, that is, each device corresponds to each step of functional architecture of the computer program, so that the entire system is called through a special software package (for example, lib library) to achieve corresponding functions.

On the other hand, each unit included in the system for performing machine learning process according to an exemplary embodiment of the disclosure may also be implemented by hardware, software, firmware, middleware, microcode, or any combination thereof. When implemented in software, firmware, middleware or microcode, the program codes or code segments used to perform corresponding operations may be stored in a computer-readable medium such as a storage medium, so that the processor may read and execute corresponding program codes or code segments to perform corresponding operations.

For example, the exemplary embodiment of the disclosure may also be implemented as a computing device including a processor and a storage part storing a computer executable instruction set, wherein the computer executable instruction set, when executed by the processor, executes a method for performing machine learning process. For example, a system comprising at least one computing device and at least one storage device storing instructions, wherein the instructions, when executed by the at least one computing device, cause the at least one computing device to perform a method for performing machine learning process described above.

Specifically, the computing device may be deployed in a server or a client, and may also be deployed on a node device in a distributed network environment. In addition, the computing device may be a PC computer, a tablet, a personal digital assistant, a smart phone, a web application, or other devices capable of executing the foregoing instruction set.

Here, the computing device does not have to be a single computing device, and may also be any combination of devices or circuits that may execute the foregoing instructions (or instruction sets) individually or jointly. The computing device may also be a part of an integrated control system or a system manager, or may be configured as a portable electronic device interfaced locally or remotely (e.g., via wireless transmission).

In the computing device, the processor may include a central processing unit (CPU), a graphics processing unit (GPU), a programmable logic device, a dedicated processor system, a microcontroller, or a microprocessor. By means of example without limitation, the processor may also include analog processors, digital processors, microprocessors, multi-core processors, processor arrays, network processors, etc.

Some operations described in the method for performing machine learning process according to an exemplary embodiment of the disclosure may be implemented by software, some operations may be implemented by hardware, and in addition, these operations may also be implemented by a combination of software and hardware.

The processor may execute instructions or codes stored in one of the storage parts, wherein the storage parts may also store data. Instructions and data may also be transmitted and received via a network interface device through a network, wherein the network interface device may use any known transmission protocol.

The storage part may be integrated with the processor, for example, RAM or flash memory is arranged within an integrated circuit microprocessor or the like. In addition, the storage part may include an independent device, such as an external disk drive, a storage array, or any other storage device that may be used by a database system. The storage part and the processor may be operatively coupled, or may communicate with each other, for example, via an I/O port, a network connection, etc., so that the processor may read files stored in the storage part.

In addition, the computing device may also include a video display (such as a liquid crystal display) and a user interaction interface (such as a keyboard, a mouse, a touch input device, etc.). All components of the computing device may be connected to each other via a bus and/or network.

Operations involved in the method for performing machine learning process according to an exemplary embodiment of the disclosure may be described as various interconnected or coupled functional blocks or functional diagrams. However, these functional blocks or functional diagrams may be equally integrated into a single logic device or operate according to imprecise boundaries.

For example, as described above, a computing device for performing machine learning process according to an exemplary embodiment of the disclosure may include a storage part and a processor, wherein the storage part stores a computer executable instruction set, and the computer executable instruction set, when executed by the processor, executes each step in the method for performing machine learning process.

## Claims

1. A system comprising at least one computing device and at least one storage device storing instructions, wherein the instructions, when executed by the at least one computing device, cause the at least one computing device to perform steps for performing machine learning process, the steps comprising:
continuously collecting prediction data;
continuously collecting real results of the prediction data;
generating updated training samples based on the collected prediction data and corresponding real results thereof and continuously obtaining updated machine learning models by using the updated training samples, according to a configured model updating scheme; and
selecting an online machine learning model for providing an online prediction service from among the machine learning models according to a configured model application scheme, and in response to a prediction service request including prediction data, providing a predicted result for the prediction data included in the prediction service request by using the online machine learning model.

2. The system according to claim 1, wherein the instructions, when executed by the at least one computing device, cause the at least one computing device further to:
automatically save the prediction data included in the prediction service request,
continuously collect the automatically saved prediction data.

3. The system according to claim 2, wherein the instructions, when executed by the at least one computing device, cause the at least one computing device further to:
collect historical data;
collect real results of the historical data;
generate initial training samples based on the collected historical data and corresponding real results thereof and train an initial machine learning model by using the initial training samples, according to an automatic machine learning technology, and on the basis of the initial machine learning model, continuously obtain the updated machine learning models by using the updated training samples according to the configured model updating scheme.

4. The system according to claim 3, wherein the configured model updating scheme is generated on the basis of a model training scheme based on which the initial machine learning model is trained.

5. The system according to claim 3, wherein the automatic machine learning technology comprises at least one of: automatic data splitting for splitting the historical data into training data and verification data, automatic feature generation for performing feature extraction on the training data and the verification data according to at least one of data field type and data distribution, automatic feature combination for determining combined features according to feature importance, automatic parameter adjusting for adjusting and optimizing parameters in a preset parameter adjusting manner, automatic model selecting for determining one or more trained models to provide the predicted result according to prediction effects, and automatic configuration of resources according to a preset rule.

6. The system according to claim 1, wherein the instructions, when executed by the at least one computing device, cause the at least one computing device further to: add corresponding feature extraction process information in metadata of model files corresponding to the obtained machine learning models.

7. The system according to claim 6, wherein the instructions, when executed by the at least one computing device, cause the at least one computing device further to: automatically perform feature extraction on the prediction data in the prediction service request by using the feature extraction process information in a file corresponding to the online machine learning model to obtain a prediction sample, and provide a predicted result for the prediction sample by using the online machine learning model.

8. The system according to claim 1, wherein the model updating scheme further comprises at least one of: a data selecting rule for selecting prediction data used to generate the updated training samples from the prediction data, and a model updating cycle, a model storage location, and an updating resource auto-configuration manner for updating a machine learning model by a model auto-training unit.

9. The system according to claim 3, wherein the model application scheme comprises at least one of a model selecting rule for selecting the online machine learning model from among the machine learning models and an application resource auto-configuration manner.

10. A computer-readable storage medium storing instructions, wherein the instructions, when executed by at least one computing device, cause the at least one computing device to:
continuously collect prediction data;
continuously collect real results of the prediction data;
generate updated training samples based on the collected prediction data and corresponding real results thereof and continuously obtain updated machine learning models by using the updated training samples, according to a configured model updating scheme; and
select an online machine learning model for providing an online prediction service from the machine learning models according to a configured model application scheme, and in response to a prediction service request including prediction data, provide a predicted result for the prediction data included in the prediction service request by using the online machine learning model.

11. A system for performing machine learning process, comprising:
a data collecting unit configured to continuously collect prediction data;
a real result collecting unit configured to for continuously collect real results of the prediction data;
a model auto-training unit configured to generate updated training samples based on the collected prediction data and corresponding real results thereof and continuously obtain updated machine learning models by using the updated training samples, according to a configured model updating scheme; and
a service providing unit configured to select an online machine learning model for providing an online prediction service from among the machine learning models according to a configured model application scheme, and in response to a prediction service request including prediction data, provide a predicted result for the prediction data included in the prediction service request by using the online machine learning model.

12. A method for performing machine learning process performed by at least one computing device, comprising:
continuously collecting prediction data;
continuously collecting real results of the prediction data;
generating updated training samples based on the collected prediction data and corresponding real results thereof and continuously obtaining updated machine learning models by using the updated training samples, according to a configured model updating scheme; and
selecting an online machine learning model for providing an online prediction service from among the machine learning models according to a configured model application scheme, and in response to a prediction service request including prediction data, providing a predicted result for the prediction data included in the prediction service request by using the online machine learning model.

13. The method according to claim 12, further comprising:
automatically saving the prediction data included in the prediction service request,
continuously collecting the automatically saved prediction data.

14. The method according to claim 13, further comprising:
collecting historical data;
collecting real results of the historical data;
generating initial training samples based on the collected historical data and corresponding real results thereof and training an initial machine learning model by using the initial training samples, according to an automatic machine learning technology, and on the basis of the initial machine learning model, continuously obtaining the updated machine learning models by using the updated training samples according to the configured model updating scheme.

15. The method according to claim 14, wherein the configured model updating scheme is generated on the basis of a model training scheme based on which the initial machine learning model is trained

16. The method according to claim 14, wherein the automatic machine learning technology comprises at least one of: automatic data splitting for splitting the historical data into training data and verification data, automatic feature generation for performing feature extraction on the training data and the verification data according to at least one of data field type and data distribution, automatic feature combination for determining combined features according to feature importance, automatic parameter adjusting for adjusting and optimizing parameters in a preset parameter adjusting manner, automatic model selecting for determining one or more trained models to provide the predicted result according to prediction effects, and automatic configuration of resources according to a preset rule.

17. The method according to claim 12, further comprising: adding corresponding feature extraction process information in metadata of model files corresponding to the obtained machine learning models.

18. The method according to claim 17, further comprising: automatically performing feature extraction on the prediction data in the prediction service request by using the feature extraction process information in a file corresponding to the online machine learning model to obtain a prediction sample, and provide a predicted result for the prediction sample by using the online machine learning model.

19. The method according to claim 12, wherein the model updating scheme further comprises at least one of: a data selecting rule for selecting prediction data used to generate the updated training samples from the prediction data, and a model updating cycle, a model storage location, and an updating resource auto-configuration manner for updating a machine learning model by a model auto-training unit.

20. The method according to claim 14, wherein the model application scheme comprises at least one of a model selecting rule for selecting the online machine learning model from among the machine learning models and an application resource auto-configuration manner.

21. A method for performing machine learning process performed by at least one computing device, comprising:
providing a first operation entrance and a second operation entrance independent from each other, wherein the first operation entrance is used to collect behavioral data that is a basis of model prediction, and the second operation entrance is used to collect feedback data that are real results of the behavioral data;
acquiring and saving the behavioral data collected through the first operation entrance and the feedback data collected through the second operation entrance;
training a machine learning model by using at least one model algorithm, based on the saved behavioral data and feedback data.

22. The method according to claim 21, wherein the acquiring and saving the behavioral data collected through the first operation entrance and the feedback data collected through the second operation entrance comprises:
in response to a triggering operation on any one of the first operation entrance and the second operation entrance, providing at least one data import path for selection;
importing the behavioral data or feedback data through the selected data import path; and
saving the imported behavioral data or feedback data.

23. The method of claim 22, wherein the importing the behavioral data or feedback data through the selected data import path comprises:
providing a configuration interface for performing information configuration on the imported data after selecting the data import path;
importing the behavioral data or feedback data, according to configuration information input through the configuration interface.

24. The method according to claim 22, wherein the saving the imported behavioral data or feedback data comprises:
performing structure extraction on the behavioral data or feedback data imported for the first time, and saving the behavioral data or feedback data as a first data slice of a behavioral data group or a feedback data group; and,
performing structure verification on the behavioral data or feedback data imported subsequently, and saving the verified behavioral data or feedback data as subsequent data slices of the behavioral data group or the feedback data group.

25. The method of claim 21, further comprising:
providing a third operation entrance independent from the first operation entrance and the second operation entrance, wherein the third operation entrance is used to perform a configuration for model training;
the training a machine learning model by using at least one model algorithm, based on the saved behavioral data and feedback data comprising:
acquiring configuration information input through the third operation entrance;
splicing the saved behavioral data and feedback data into training data according to the configuration information input through the third operation entrance, generating training samples by performing feature extraction on the training data, and training the machine learning model by using at least one model algorithm based on the training samples.

26. The method according to claim 25, wherein the configuration information input through the third operation entrance relates to at least one of a configuration for exploring a model training scheme and a configuration for self-learning on the basis of an existing model training scheme.

27. The method according to claim 26, further comprising: visually presenting the following processes to users: splicing the saved behavioral data and feedback data into the training data according to the configuration information related to the configuration for exploring the model training scheme, generating the training samples by performing feature extraction on the training data, and training the machine learning model by using at least one model algorithm based on the training samples.

28. The method of claim 21, further comprising:
further providing a fourth operation entrance independent from the first operation entrance and the second operation entrance, wherein the fourth operation entrance is used to perform a configuration regarding providing a prediction service by using the machine learning model;
acquiring configuration information input through the fourth operation entrance;
providing the prediction service by using the machine learning model, based on the configuration information input through the fourth operation entrance.

29. The method of claim 28, wherein the configuration information input through the fourth operation entrance relates to providing at least one of an online prediction service and a batch prediction service by using the machine learning model, and
the providing the prediction service by using the machine learning model, based on the configuration information input through the fourth operation entrance comprising:
providing at least one of the online prediction service and the batch prediction service by using the machine learning model, based on at least one of configuration information related to the online prediction service and configuration information related to the batch prediction service input through the fourth operation entrance.

30. The method according to claim 29, wherein providing the online prediction service by using the machine learning model, based on configuration information related to the online prediction service input through the fourth operation entrance comprising:
receiving a prediction service request including prediction data, through an API address set in the configuration information;
in response to the received prediction service request, obtaining a predicted result for the prediction data by using the machine learning model, and transmitting the predicted result through the API address.

31. The method according to claim 30, wherein the configuration information related to the online prediction service input through the fourth operation entrance further includes an on-off state of automatic backflow of the prediction data, and the method further comprising:
in case of the on-off state being on, saving the prediction data included in the prediction service request in a corresponding behavioral data group.

32. The method according to claim 21, wherein all operation entrances are provided on the same interactive interface.

33. The method of claim 32, further comprising:
providing an information display area corresponding to each operation entrance on the interactive interface;
obtaining current operation state information corresponding to each operation entrance;
configuring the information display area corresponding to each operation entrance, and displaying the current operation state information of a corresponding operation entrance.

34. The method of claim 32, further comprising:
for each operation entrance, providing a progress indicating bar corresponding to the operation entrance, respectively;
for each operation entrance, detecting a current progress of performing a corresponding operation;
controlling a display state of a corresponding progress indicating bar, according to the current detected progress.

35. The method according to claim 34, wherein for each operation entrance, the providing a progress indicating bar corresponding to the operation entrance, respectively, comprising:
setting each operation entrance to used as a progress indicating bar corresponding to the operation entrance at the same time.

36. A system for performing machine learning process comprising:
an interaction unit configured to provide a first operation entrance and a second operation entrance independent from each other, wherein the first operation entrance is used to collect behavioral data that is a basis of model prediction, and the second operation entrance is used to collect behavioral data that are real results of the behavioral data;
a data collecting unit configured to acquire and save the behavioral data collected through the first operation entrance;
a real result collecting unit configured to acquire and save the feedback data collected through the second operation entrance; and,
a model auto-training unit configured to train a machine learning model by using at least one model algorithm based on the stored behavioral data and feedback data.

37. A system comprising at least one computing device and at least one storage device storing instructions, wherein the instructions, when executed by the at least one computing device, cause the at least one computing device to perform a method according to any one of claims 21 to 35.

38. A computer-readable storage medium storing instructions, wherein the instructions, when executed by at least one computing device, cause the at least one computing device to perform a method according to any one of claims 21 to 35.
